# EUROPEAN PATENT SPECIFICATION

(11) **EP 4 336 934 B1**
(45) Date of publication and mention of the grant of the patent: **21.01.2026**
(21) Application number: 22807820.0
(22) Date of filing: 11.05.2022
(51) Int. Cl.: H04L 5/00, H04W 52/02, H04W 76/27, H04W 76/28, H04W 72/23

(54) **CONFIGURATION OF A PLURALITY OF PARAMETER SETS INDICATIVE OF NUMBER OF INTERVALS TO MONITOR X, NUMBER OF INTERVALS TO SKIP Y, AND INDEX Z OF A SEARCH SPACE SET GROUP**
KONFIGURATION EINER VIELZAHL VON PARAMETERSÄTZEN ZUR ANZEIGE DER ANZAHL X VON INTERVALLEN ZUR ÜBERWACHUNG, ANZAHL Y VON INTERVALLEN ZUM ÜBERSPRINGEN UND INDEX Z EINER SUCHRAUMSATZGRUPPE
CONFIGURATION D'UNE PLURALITÉ D'ENSEMBLES DE PARAMÈTRES INDIQUANT UN NOMBRE D'INTERVALLES À SURVEILLER X, UN NOMBRE D'INTERVALLES À SAUTER Y ET UN INDEX Z D'UN GROUPE DE ENSEMBLES D'ESPACES DE RECHERCHE

(30) Priority: 12.05.2021 KR 20210061432
(43) Date of publication of application: 13.03.2024
(73) Proprietor: LG Electronics Inc., Yeongdeungpo-gu Seoul 07336 (KR)
(72) Inventor: LEE, Sunghoon, Seoul 06772 (KR); YANG, Suckchel, Seoul 06772 (KR); KIM, Jaehyung, Seoul 06772 (KR); KIM, Seonwook, Seoul 06772 (KR); HWANG, Seunggye, Seoul 06772 (KR)
(74) Representative: Mooser, Sebastian Thomas
(86) International application number: PCT/KR2022/006720
(87) International publication number: WO 2022/240173

(56) References cited:
- WO-A1-2020/145747
- WO-A1-2022/214081
- US-A1- 2020 314 898
- INTERDIGITAL ET AL: "PDCCH monitoring reduction in Active Time", vol. RAN WG1, no. 105e, 11 May 2021 (2021-05-11), 650, ROUTE DES LUCIOLES ; F-06921 SOPHIA-ANTIPOLIS CEDEX ; FRANCE, XP052006429, Retrieved from the Internet <URL:https://ftp.3gpp.org/tsg_ran/WG1_RL1/TSGR1_105-e/Docs/R1-2105744.zip> [retrieved on 20210511]
- SPREADTRUM COMMUNICATIONS: "Discussion on power saving techniques for connected-mode UE", vol. RAN WG1, no. 105e, 11 May 2021 (2021-05-11), 650, ROUTE DES LUCIOLES ; F-06921 SOPHIA-ANTIPOLIS CEDEX ; FRANCE, XP052006180, Retrieved from the Internet <URL:https://ftp.3gpp.org/tsg_ran/WG1_RL1/TSGR1_105-e/Docs/R1-2104434.zip> [retrieved on 20210511]
- NOKIA ET AL: "Evaluation of Active Time enhancements", vol. RAN WG1, no. e-Meeting; 20210125 - 20210205, 18 January 2021 (2021-01-18), XP051971821, Retrieved from the Internet <URL:https://ftp.3gpp.org/tsg_ran/WG1_RL1/TSGR1_104-e/Docs/R1-2101666.zip> [retrieved on 20210118]
- LG ELECTRONICS: "Discussion on DCI-based power saving adaptation during DRX Active Time", vol. RAN WG1, no. 105-e, 12 May 2021 (2021-05-12), 650, ROUTE DES LUCIOLES ; F-06921 SOPHIA-ANTIPOLIS CEDEX ; FRANCE, XP052011449, Retrieved from the Internet <URL:https://ftp.3gpp.org/tsg_ran/WG1_RL1/TSGR1_105-e/Docs/R1-2105436.zip> [retrieved on 20210512]
- APPLE INC.: "Enhanced DCI-based power saving adaptation", 3GPP DRAFT; R1-2101394, vol. RAN WG1, 18 January 2021 (2021-01-18), pages 1 - 3, XP051971561
- QUALCOMM INCORPORATED: "DCI-based power saving adaptation during DRX Active Time", 3GPP DRAFT; R1-2101476, vol. RAN WG1, 19 January 2021 (2021-01-19), pages 1 - 4, XP051971641
- HUAWEI, HISILICON: "Extension(s) to Rel-16 DCI-based power saving adaptation for an active BWP", 3GPP DRAFT; R1-2100218, vol. RAN WG1, 19 January 2021 (2021-01-19), pages 1 - 8, XP051970850

## Description

### TECHNICAL FIELD

The present disclosure relates to a method of transmitting and receiving a downlink control channel and an apparatus therefor and, more particularly, to a method of indicating physical downlink control channel (PDCCH) monitoring adaptation through downlink control information (DCI) and monitoring a PDCCH based on the indicated PDCCH monitoring adaptation and an apparatus therefor.

### BACKGROUND ART

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

Document "PDCCH monitoring reduction in Active Time", INTERDIGITAL ET AL, 3GPP DRAFT, R1-2105744, vol. RAN WG1, no. 105e; 11 May 2021, XP052006429, discloses a unified design with search space set group, SSSG, switching and PDCCH skipping.

### DISCLOSURE

### Technical Problem

An object of the present disclosure is to provide a method of transmitting and receiving a downlink control channel and an apparatus therefor.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

### Technical Solution

The invention is defined by the appended claims.

In an aspect of the present disclosure, according to independent claim 1, provided herein is a method of monitoring a physical downlink control channel (PDCCH) by a user equipment (UE) in a wireless communication system.

In another aspect of the present disclosure, provided herein is a user equipment (UE) for monitoring a physical downlink control channel (PDCCH) in a wireless communication system, according to independent claim 4.

In another aspect of the present disclosure, provided herein is a method of transmitting a physical downlink control channel (PDCCH) by a base station (BS) in a wireless communication system, according to independent claim 6.

In another aspect of the present disclosure, provided herein is a base station (BS) for transmitting a physical downlink control channel (PDCCH) in a wireless communication system, according to independent claim 7.

### Advantageous Effects

According to the present disclosure, PDCCH monitoring adaptation for power saving within a discontinuous reception (DRX) active time of a UE may be indicated through DCI. In this case, the DCI may indicate PDCCH monitoring skipping and/or search space (SS) set switching through various methods.

Therethrough, the UE may reduce a time for monitoring a PDCCH within the DRX active time and SS sets to be monitored, thereby reducing power consumption.

It is to be understood that both the foregoing general description and the following detailed description of the present disclosure are exemplary and explanatory and are intended to provide further explanation of the disclosure as claimed.

### BRIEF DESCRIPTION OF DRAWINGS

FIG. 1 illustrates a radio frame structure;
FIG. 2 illustrates a resource grid of a slot;
FIG. 3 shows an example in which a physical channel is mapped in a slot;
FIGS. 4 and 5 are diagrams for explaining idle mode discontinuous reception (DRX) operation;
FIGS. 6 to 8 are diagrams for explaining DRX operation in a radio resource control (RRC) connected mode;
FIG. 9 is a diagram for explaining a method of monitoring DCI format 2_6;
FIGS. 10 to 12 are diagrams for explaining the overall operation processes of a UE and a BS according to an embodiment of the present disclosure;
FIG. 13 and 14 illustrate an exemplary communication system applied to the present disclosure;
FIG. 15 illustrates an exemplary communication system applied to the present disclosure;
FIG. 16 illustrates an exemplary wireless device applicable to the present disclosure;
FIG. 17 illustrates an exemplary vehicle or autonomous driving vehicle applicable to the present disclosure; and
FIG. 18 illustrates an extended reality (XR) device applicable to the present disclosure.

### Mode for Invention

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

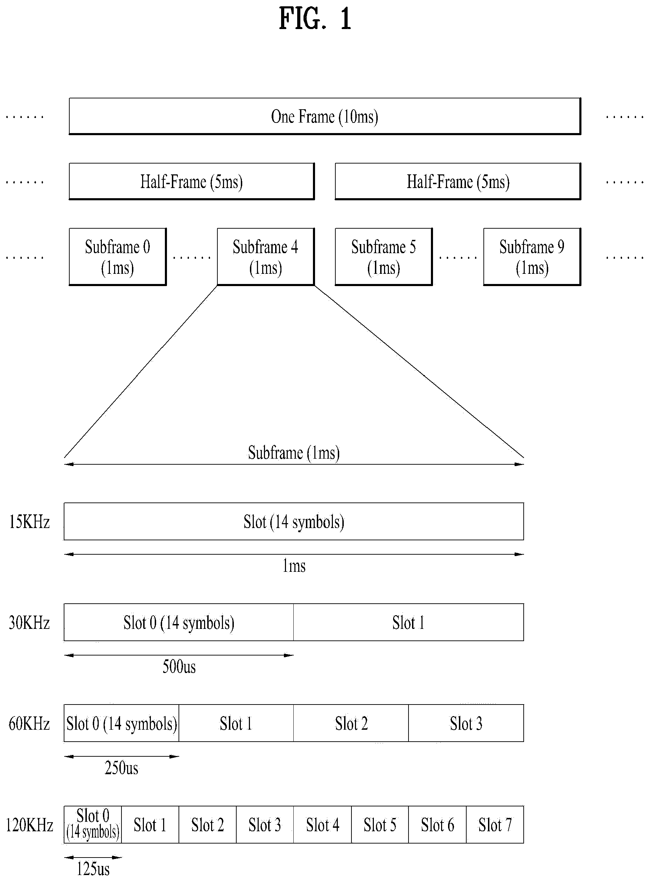

FIG. 1 illustrates a radio frame structure.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | Nslotsymb | Nframe,uslot | Nsubframe,uslot |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * Nslotsymb: number of symbols in a slot * Nframe,uslot: number of slots in a frame * Nsubframe,uslot: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | Nslotsymb | Nframe,uslot | Nsubframe,uslot |
|---|---|---|---|
| 60KHz (u=2) | 12 | 40 | 4 |

The frame structure is merely an example, and the number of subframes, the number of slots, and the number of symbols in a frame may be changed in various manners. In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5^{th} generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

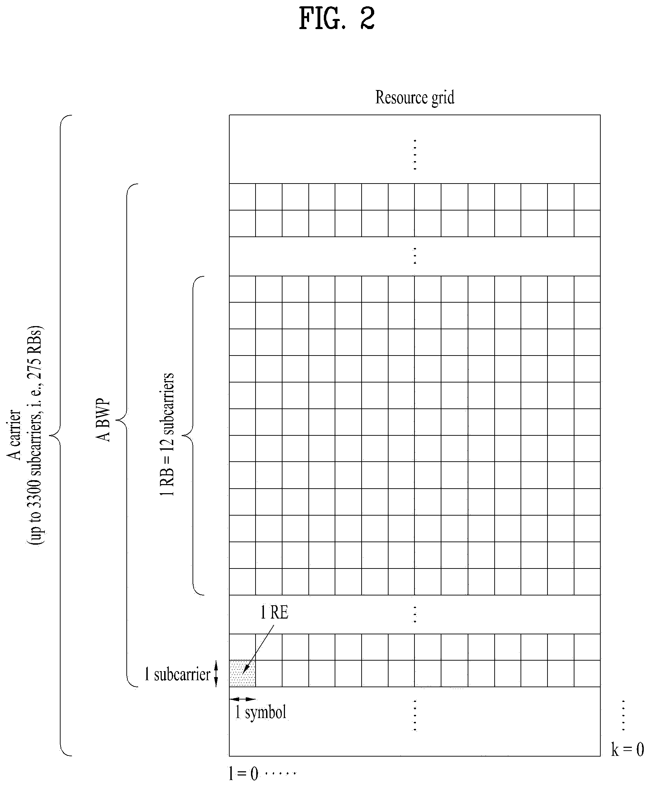

FIG. 2 illustrates a resource grid during the duration of one slot. A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

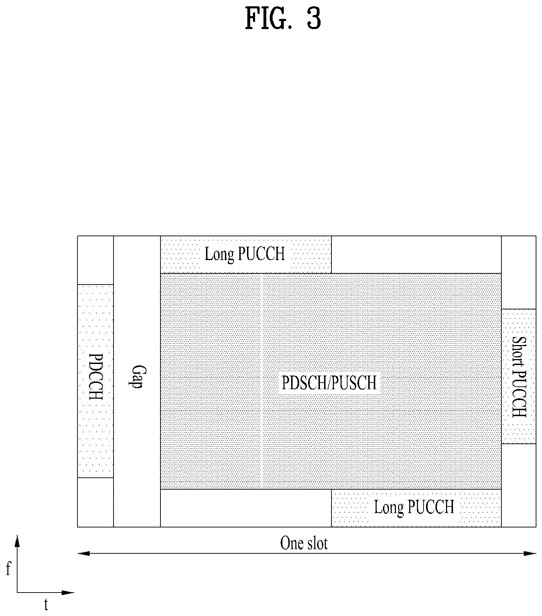

FIG. 3 shows an example in which a physical channel is mapped in a slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

### DL Channel Structures

An eNB transmits related signals on later-described DL channels to a UE, and the UE receives the related signals on the DL channels from the eNB.

### (1) Physical Downlink Shared Channel (PDSCH)

The PDSCH carries DL data (e.g., a DL-shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

### (2) Physical Downlink Control Channel (PDCCH)

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

To receive the PDCCH, the UE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 4 lists exemplary PDCCH SSs.

**[Table 4]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DL BWP of a serving cell. For example, the following parameters/information may be provided for each SS set. Each SS set may be associated with one CORESET, and each CORESET configuration may be associated with one or more SS sets. - searchSpaceId: indicates the ID of the SS set.
- controlResourceSetId: indicates a CORESET associated with the SS set.
- monitoringSlotPeriodicity AndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The UE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.

Table 5 illustrates exemplary DCI formats transmitted on the PDCCH.

**[Table 5]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

### DRX (Discontinuous Reception) Operation

The UE uses Discontinuous Reception (DRX) in RRC_IDLE and RRC_INACTIVE state in order to reduce power consumption. When the DRX is configured, the UE performs a DRX operation according to DRX configuration information.

When the UE operates based on the DRX, the UE repeats ON/OFF for reception. For example, when the DRX is configured, the UE attempts to receive/detect the PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the UE can receive/monitor a downlink channel discontiguously. That is, a UE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.
- RRC_Idle state: state in which a radio connection (RRC connection) is not established between a base station and a UE.
- RRC Inactive state: state in which a radio connection (RRC connection) has been established between a base station and a UE, but a radio connection is inactivated.
- RRC_Connected state: state in which a radio connection (RRC connection) has been established between a base station and a UE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. In the Idle mode DRX, whether to permit eDRX may be configured based on system information (e.g., SIB1).

The SIB1 may include an eDRX-Allowed parameter. The eDRX-Allowed parameter is a parameter indicating whether Idle mode extended DRX is permitted.

### (1) IDLE Mode DRX

In the IDLE mode, the UE may use DRX to reduce power consumption. One paging occasion (PO) may be a time interval (e.g., a slot or a subframe) in which a paging-radio network temporary identifier (P-RNTI) based physical downlink control channel (PDCCH) may be transmitted. The P-RNTI-based PDCCH may address/schedule a paging message. For P-RNTI-based PDCCH transmission, the PO may indicate a first subframe for PDCCH repetition.

One paging frame (PF) is one radio frame which may include one or a plurality of paging occasions. When DRX is used, a UE may be configured to monitor only one PO per DRX cycle. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (RedCap) UE, normal UE and/or IAB-MT(mobile termination).

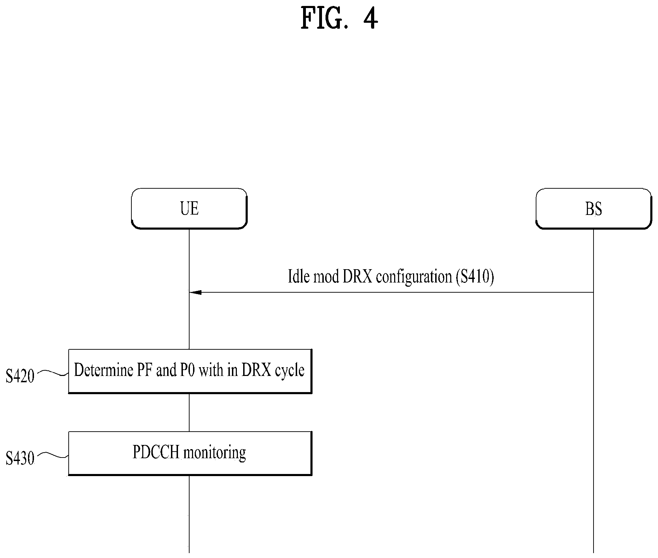

FIG. 4 is a flowchart showing an example of a method of performing an Idle mode DRX operation.

A UE receives, from a base station, Idle mode DRX configuration information through a higher layer signaling (e.g., system information) (S410).

Furthermore, the UE determines a PF (Paging Frame) and a PO (Paging Occasion), for monitoring a physical downlink control channel (e.g., PDCCH) in a paging DRX cycle based on the Idle mode DRX configuration information (S420). In this case, the DRX cycle includes On Duration and sleep duration (or Opportunity for DRX).

Furthermore, the UE monitors a PDCCH in the PO of the determined PF (S430). The UE monitors only one time interval (PO) for each paging DRX cycle. For example, the time interval may be a slot or a subframe.

Additionally, if the UE receives a PDCCH (more exactly, CRC of PDCCH) scrambled by a P-RNTI during On duration (i.e., if paging is detected), the UE may transit to a connected mode and transmit or receive data with the base station.

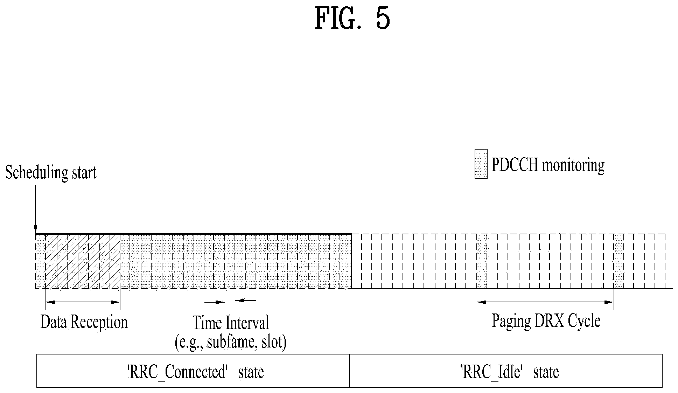

FIG. 5 is a diagram showing an example of an Idle mode DRX operation.

Referring to FIG. 5, if there is a traffic (data) toward a UE in the RRC_Idle state (hereinafter referred to as 'Idle state'), paging occurs toward the corresponding UE.

Thus, the UE wakes up every (paging) DRX cycle and monitors a PDCCH.

If Paging is present, the UE transits to a Connected state, and receives data. Otherwise, the UE may enter a sleep mode again.

### (2) Connected Mode DRX (C-DRX)

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the UE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

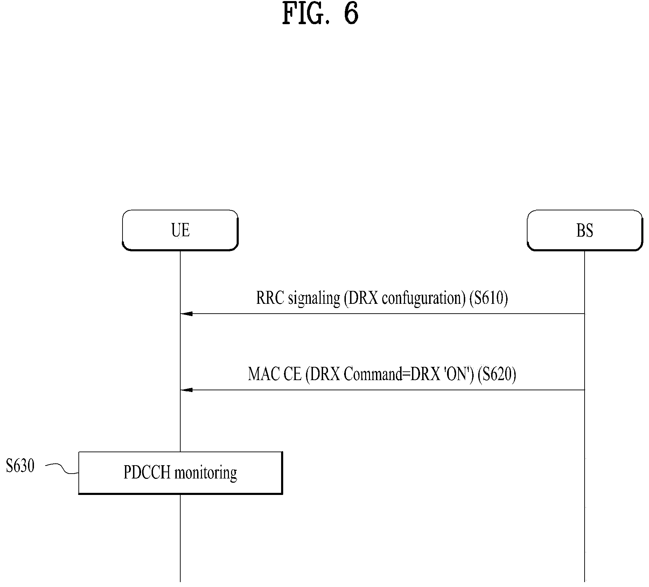

FIG. 6 is a flowchart showing an example of a method of performing a C-DRX operation.

A UE receives, from a base station, RRC signalling (e.g., MAC-MainConfig IE) including DRX configuration information (S610). The DRX configuration information may include the following information.
- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to a time interval to be continuously monitored at the beginning of a DRX cycle, which may be represented in units of milliseconds (ms).
- drx-InactivityTimer: the duration after the PDCCH occasion in which a PDCCH indicates a new UL or DL transmission for the MAC entity. For example, the duration may be a time interval represented in units of ms after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.
- drx-RetransmissionTimer: for DL, the maximum duration until a DL retransmission is received; for UL the maximum duration until a grant for UL retransmission is received. For example, for UL, drx-RetransmissionTimer indicates the number of slots in a bandwidth part (BWP) where a transport block (TB) to be retransmitted is transmitted. For DL, drx-RetransmissionTimer indicates the number of slots in a BWP in which a TB to be retransmitted is received.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- drx-SlotOffset: the delay before drx-onDurationTimer starts. For example, the delay may be expressed in units of ms, and more particularly, in multiples of 1/32 ms.
- Active time: total duration that the UE monitors PDCCH, which may include (a) the "on-duration" of the DRX cycle, (b) the time UE is performing continuous reception while the drx-inactivity timer has not expired, and (c) the time when the UE is performing continuous reception while waiting for a retransmission opportunity.

Specifically, when the DRX cycle is configured, an active time for a serving cell of a DRX group includes the following.
- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S620), the UE monitors a PDCCH for the ON duration of a DRX cycle based on the DRX configuration (S630).

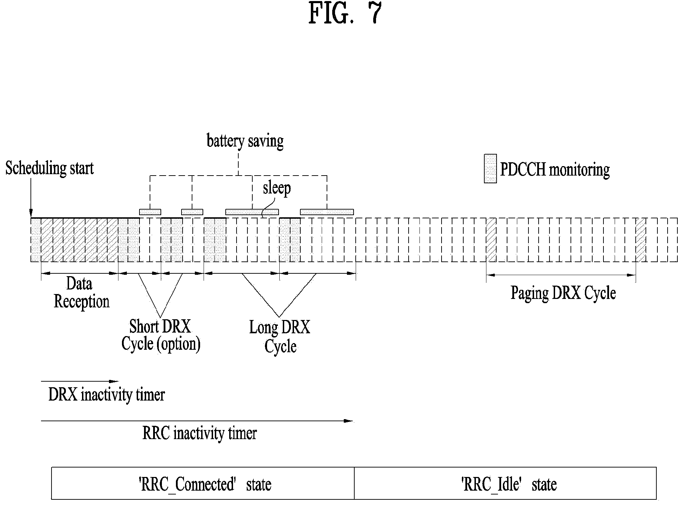

FIG. 7 is a diagram showing an example of a C-DRX operation.

Referring to FIG. 7, when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the UE shifts to an Idle state and performs an Idle mode DRX operation.

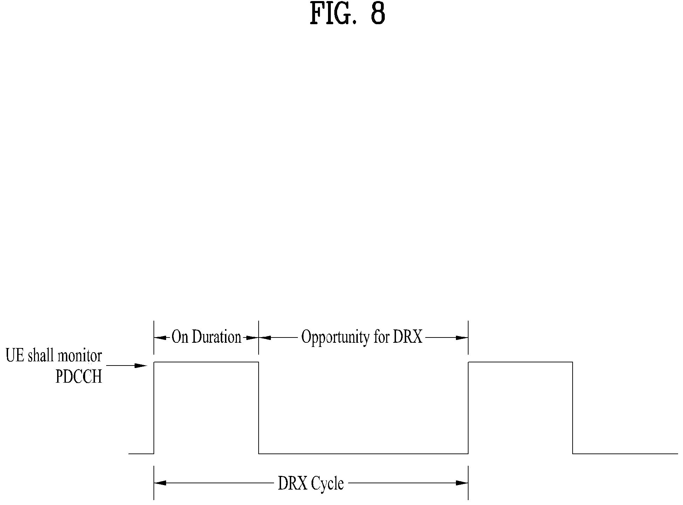

FIG. 8 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

### (3) WUS (DCI Format 2_6)

According to the power saving technology of Rel-16 NR systems, when the DRX operation is performed, it is possible to inform the UE whether the UE needs to wake up for each DRX cycle by DCI format 2_6.

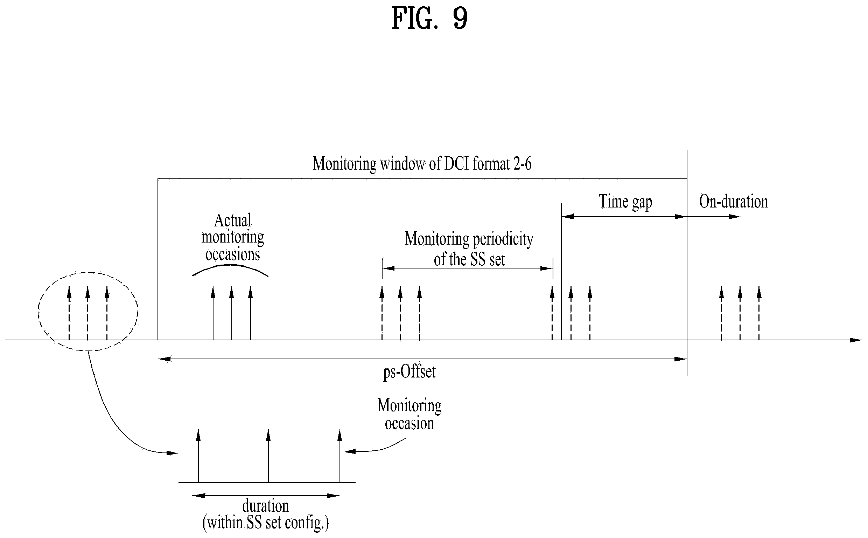

Referring to FIG. 9, a PDCCH monitoring occasion for DCI format 2_6 may be determined by *ps-Offset* indicated by the network and a time gap reported by the UE. In this case, the time gap reported by the UE may be interpreted as a preparation period necessary for an operation after the UE wakes up.

Referring to FIG. 9, the base station (BS) may provide the UE with a search space (SS) set configuration capable of monitoring DCI format 2_6. According to the corresponding SS set configuration, DCI format 2_6 may be monitored in consecutive slots as long as the duration at the monitoring periodicity interval.

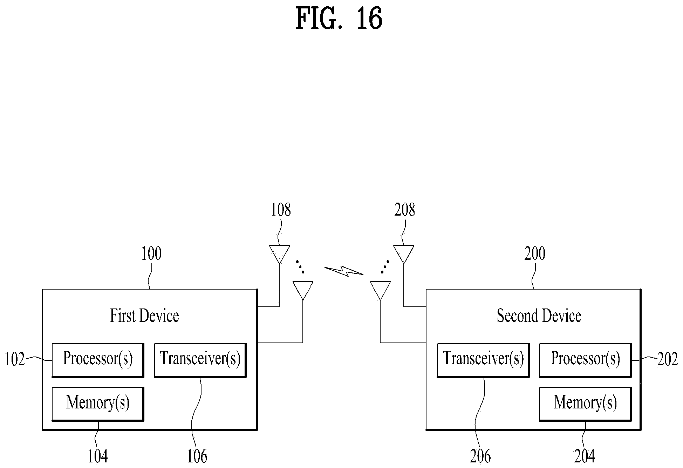

In the DRX configuration, a monitoring window for monitoring DCI format 2_6 may be determined by the start time of the DRX cycle (e.g., a point where the on-duration timer starts) and *ps-Offset* configured by the BS. In addition, PDCCH monitoring may not be required in the time gap reported by the UE. Consequently, an SS set monitoring occasion on which the UE actually performs monitoring may be determined as a first full duration (i.e., actual monitoring occasions of FIG. 16) within the monitoring window.

If the UE detects DCI format 2_6 in the monitoring window configured based on *ps-Offset,* the UE may be informed by the BS whether the UE wakes up in the next DRX cycle.

### Search Space Set (SS Set) Group Switching

In the current NR standards, the SS set group switching has been defined to reduce the power consumption of the UE. According to the SS set group switching, the UE may be configured with a plurality of SS set groups, and an SS set group to be monitored by the UE among the plurality of SS set groups may be indicated. In addition, the UE may monitor an SS set included in the corresponding SS set group according to the corresponding indication and skip monitoring of SS sets not included in the corresponding SS set group.

For example, the UE may be provided with a list of SS set groups configured with a Type 3-PDCCH common search space (CSS) set and/or a user-specific search space (USS) set. In addition, if a list of SS set groups is provided, the UE may monitor SS sets corresponding to group index #0.

The UE may perform the SS set group switching operation depending on whether SearchSpaceSwitchTrigger is configured.

If SearchSpaceSwitchTrigger is configured for the UE, the UE may switch the SS set group according to the indication of DCI format 2_0.

For example, if the value of an SS Set Group Switching Flag field in DCI format 2_0 is 0, the UE may start monitoring SS set group #0 after a predetermined time from the time when the UE receives DCI format 2_0 and stop monitoring SS set group #1.

If the value of the SS Set Group Switching Flag field in DCI format 2_0 is 1, the UE may start monitoring SS set group #1 after a predetermined time from the time when the UE receives DCI format 2_0 and stop monitoring SS set group #0. If the UE starts monitoring SS set group #1, the UE may start counting a timer configured by SearchSpaceSwitchTimer. If the timer expires, the UE may start monitoring SS set group #0 after a predetermined time from the time when the timer expires and stop monitoring SS set group #1.

If SearchSpaceSwitchTrigger is not configured for the UE, the UE may change the SS set group based on DCI reception. For example, when the UE receives the DCI while monitoring SS set group #0 (or SS set group #1), the UE may start monitoring SS set group #1 (or SS set group #0) after a predetermined time from the time when the UE receives the DCI and stop monitoring SS set group #0 (or SS set group #1). In this case, the UE may start counting the timer configured by SearchSpaceSwitchTimer. If the timer expires, the UE may start monitoring SS set group #0 (or SS set group #1) after a predetermined time from the time when the timer expires and stop monitoring SS set group #1 (or SS set group #0).

The present disclosure proposes a method in which a UE indicated to perform a DRX operation is capable of receiving a PDCCH monitoring adaptation operation within a DRX active time based on DCI.

The UE may be configured with a maximum of 10 SS sets per BWP. The UE may monitor PDCCH candidates included in SS sets (hereinafter, monitoring of SS sets).

Since the UE needs to perform blind decoding (BD) on a PDCCH that the UE is not aware of a timing when the PDCCH will be received and a DCI format with which the PDCCH will be received, PDCCH monitoring occupies a large portion of power consumption during the DRX operation.

As technology for power saving in wireless communication systems (e.g., a Rel-17 NR system etc.), PDCCH monitoring adaptation in which the UE adjusts the number of times of PDCCH monitoring to reduce power consumption within the DRX active time has been discussed.

Examples of PDCCH monitoring adaptation include PDCCH monitoring skipping (hereinafter, skipping) and SS set group switching (hereinafter, switching).

For PDCCH monitoring adaptation, a BS may indicate, to the UE, information related to PDCCH monitoring adaptation using various DCI formats. The UE may monitor a PDCCH according to a PDCCH monitoring adaptation operation based on the corresponding indication.

An embodiment of the present disclosure proposes methods of indicating a DCI-based PDCCH monitoring adaptation operation. To this end, a method in which the UE performs PDCCH monitoring skipping and SS set switching operations, which are candidate techniques of PDCCH monitoring adaptation, may be defined.

In addition, even when PDCCH monitoring adaptation is indicated, at least one default SS set on which the UE performs PDCCH monitoring may be defined regardless of the corresponding PDCCH monitoring adaptation.

DCI that indicates an operation according to the present disclosure is not limited to a specific DCI format. A field for indicating the corresponding operation may be newly defined or all DCI formats that may indicate the corresponding operation may be used.

PDCCH monitoring adaptation operations of PDCCH monitoring skipping and SS set switching may be configured simultaneously for one UE. The BS may selectively indicate one operation or indicate a combination of the operations.

For convenience of description, an existing PDCCH monitoring method to which PDCCH monitoring adaptation is not applied may be referred to as a first PDCCH monitoring method, and a new PDCCH monitoring method to which PDCCH monitoring adaptation is applied may be referred to as a second PDCCH monitoring method.

However, if a person skilled in the art clearly understands the meaning of the first monitoring adaptation and the second monitoring adaptation without confusion therebetween according to description, the expressions "first" and "second" may be omitted. For example, PDCCH monitoring may mean any one of a first PDCCH monitoring adaptation method or a second PDCCH monitoring adaptation method or both the first PDCCH monitoring adaptation method and the second PDCCH monitoring adaptation method, depending on the flow of description.

In the following description, embodiments will be separately described for clarification of explanation and should not be limitedly interpreted as a meaning that they are independently performed. For example, embodiments to be described later may be implemented individually, but at least some thereof may be implemented in a combined form within the scope that they do not conflict with each other.

Meanwhile, embodiments to be described later may be applied to, for example, extended reality (XR). XR is a concept that encompasses augmented reality (AR), virtual reality (VR), and mixed reality (MR). XR is characterized in that a timing when traffic is expected to be received is fixed to frames per second (fps) and traffic may be received later or earlier than the expected timing due to the influence of jitter. This jitter of XR traffic is represented as a truncated Gaussian probability distribution. Therefore, a power saving effect may be expected by cyclically configuring DRX according to fps. Even when DRX is not configured, if PDCCH monitoring adaptation is configured, the power saving effect may be expected only by PDCCH monitoring adaptation. It is apparent that the power saving effect may also be expected by configuring both DRX and PDCCH monitoring adaptation.

An expected traffic reception timing and an expected reception timing which is caused by the effect of jitter may be expressed as a probability, and embodiments to be described later may be applied to achieve the power saving effect in an XR environment as described above.

For example, since a jitter probability is low and thus a traffic reception probability is low at a timing which is relatively distant in time from the expected traffic reception timing, the UE may save power by sparsely monitoring a PDCCH. Conversely, since the jitter probability is high and thus the traffic reception probability is high at a timing which is close in time to the expected traffic reception timing, the UE may adjust power consumption according to the reception probability by densely monitoring the PDCCH. For this purpose, SS set group #0 may be configured as an SS set group including an SS set for dense PDCCH monitoring, and SS set group #1 may be configured as an SS set group including an SS set for sparse PDCCH monitoring.

For example, the UE may perform PDCCH monitoring by configuring a PDCCH monitoring pattern of SS set group #1/SS set group #0/SS set group #1 based on [Embodiment #4] to be described later.

As another example, the UE may repeat an operation of performing PDCCH monitoring during a short duration in which the traffic reception probability is high due to a high jitter probability and then entering micro-sleep. Therethrough, when traffic is not normally received, the UE may quickly enter micro-sleep to achieve power saving and then perform PDCCH monitoring to receive retransmitted traffic, thereby increasing the efficiency of PDCCH monitoring. For example, the UE may perform PDCCH monitoring by configuring a PDCCH monitoring pattern of PDCCH monitoring/PDCCH monitoring skipping based on [Embodiment #4] to be described later.

While the present disclosure proposes an operation through DCI reception within a DRX active time as an example, the same operation may be applied to a UE for which DRX is not configured. In this case, a duration of one or more detailed operations included in the PDCCH monitoring pattern may have a fixed value.

Now, operation processes of the UE and BS according to an embodiment of the present disclosure will be described.

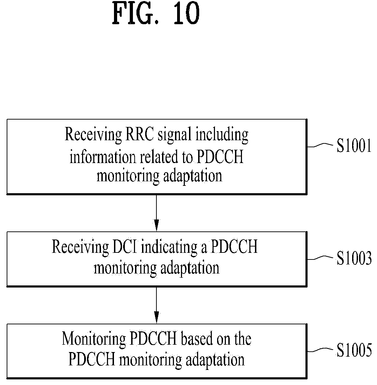

For example, in communication systems such as LTE and NR, when a UE in an RRC_CONNECTED mode receives DCI format x_1 and/or DCI format x_2 in a state in which a DRX operation and an operation according to embodiments proposed in the present disclosure are configured, the UE and the BS may operate as illustrated in FIGS. 10 to 12. In this case, x is an arbitrary integer indicating various DCI formats.

FIG. 10 is a diagram for explaining the overall operation process of the UE according to an embodiment of the present disclosure.

Referring to FIG. 10, the UE may receive a radio resource control (RRC) signal including information related to PDCCH monitoring adaptation (S1001). For example, the information included in the RRC signal may be based on at least one of [Embodiment #1] to [Embodiment #4] to be described later.

The UE may receive DCI indicating PDCCH monitoring adaptation (S1003). For example, the DCI may indicate an operation related to PDCCH monitoring adaptation based on at least one of [Embodiment #1] to [Embodiment #4] to be described later.

The UE may monitor a PDCCH based on the indicated PDCCH monitoring adaptation and then receive the PDCCH (S1005). For example, the UE may monitor and receive the PDCCH based on at least one of [Embodiment #1] to [Embodiment #4] to be described later.

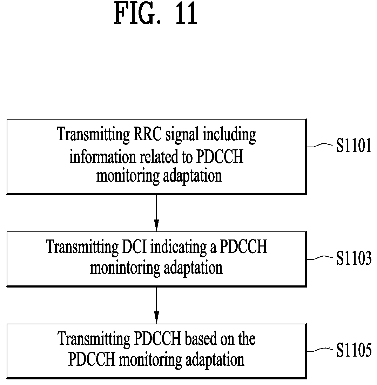

FIG. 11 is a diagram for explaining the overall operation process of the BS according to an embodiment of the present disclosure.

Referring to FIG. 11, the BS may transmit an RRC signal including information related to PDCCH monitoring adaptation (S1101). For example, the information included in the RRC signal may be based on at least one of [Embodiment #1] to [Embodiment #4] to be described later.

The BS may transmit DCI indicating PDCCH monitoring adaptation (S1103). For example, the BS may indicate an operation related to PDCCH monitoring adaptation through the DCI based on at least one of [Embodiment #1] to [Embodiment #4] to be described later.

The BS may transmit a PDCCH based on the indicated PDCCH monitoring adaptation (S1105). For example, the BS may transmit the PDCCH based on at least one of [Embodiment #1] to [Embodiment #4] to be described later.

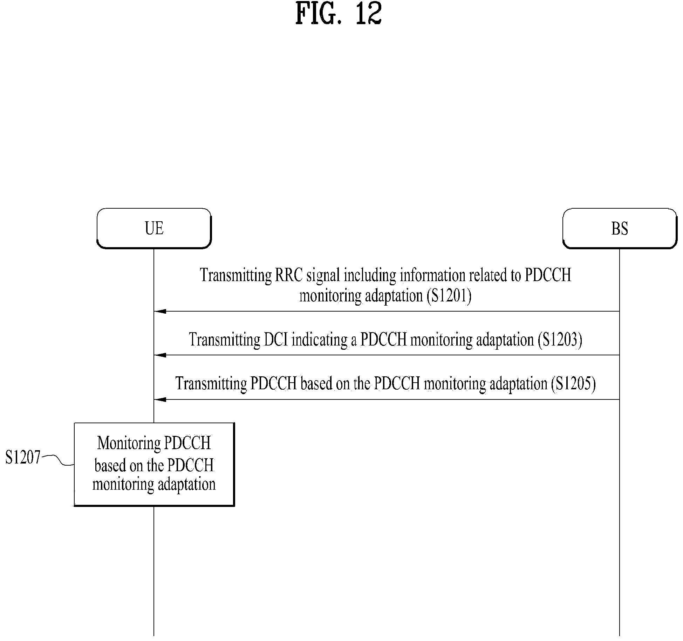

FIG. 12 is a diagram for explaining the overall operation process of a network according to an embodiment of the present disclosure.

Referring to FIG. 12, the BS may transmit an RRC signal including information related to PDCCH monitoring adaptation to the UE (S1201). For example, the information included in the RRC signal may be based on at least one of [Embodiment #1] to [Embodiment #4] to be described later.

The BS may transmit DCI indicating PDCCH monitoring adaptation to the UE (S1203). For example, the BS may indicate an operation related to PDCCH monitoring adaptation through the DCI based on at least one of [Embodiment #1] to [Embodiment #4] to be described later.

The BS may transmit a PDCCH to the UE based on the indicated PDCCH monitoring adaptation (S 1205). For example, the BS may transmit the PDCCH based on at least one of [Embodiment #1] to [Embodiment #4] to be described later.

The UE may monitor the PDCCH based on the indicated PDCCH monitoring adaptation and then receive the PDCCH (S 1207). For example, the UE may monitor and receive the PDCCH based on at least one of [Embodiment #1] to [Embodiment #4] to be described later.

In other words, at least one of embodiments to be described later may be applied to the operation of the UE (e.g., a changed PDCCH monitoring method) based on PDCCH monitoring adaptation. While FIGS. 10 to 12 assume that the network explicitly or implicitly indicates the operation of the UE based on PDCCH monitoring adaptation through the DCI, the present disclosure is not limited thereto. For example, PDCCH monitoring adaptation may also be indicated through a medium access control - control element (MAC-CE).

Meanwhile, PDCCH monitoring adaptation may be initiated after a predetermined time from the reception or end of reception of DCI format x_1 and/or DCI format x_2. For example, the predetermined time may be predefined, signaled through RRC, or determined through the DCI format x_1 and/or DCI format x_2.

To indicate the release/termination of the operation of the UE based on PDCCH monitoring adaptation, a method, which is the same as a method used in the initiation of the operation of the UE based on PDCCH monitoring adaptation, may be used. For example, when the initiation of PDCCH monitoring adaptation is indicated through DCI, the release/termination of PDCCH monitoring adaptation may also be indicated through the DCI. As another example, when the initiation of PDCCH monitoring adaptation is indicated through a MAC-CE, the release/termination of PDCCH monitoring adaptation may also be indicated through the MAC-CE.

As PDCCH monitoring adaptation is initiated, the UE may continuously perform an operation according to PDCCH monitoring adaptation, which will be described later, until a timing at which the termination of the operation is indicated, periodically perform the operation, or perform the operation only for a predetermined time (e.g., based on a timer). Alternatively, the operation may be terminated as event conditions for the termination of the operation are satisfied.

Meanwhile, PDCCH monitoring adaptation, which will be described later, may be configured for each aggregation level (AL)/SS set/DCI format to be monitored. Additionally, PDCCH monitoring adaptation may not be applied to a specific AL/specific SS set/specific DCI format as an exceptional case. A fallback operation of the UE/BS may be defined in relation to PDCCH monitoring adaptation. For example, an operation for handling an error case such as the case in which there is misalignment of PDCCH monitoring adaptation between the BS and the UE due to the UE failing to detect DCI indicating PDCCH monitoring adaptation may be defined.

In relation to all the operations described with reference to FIGS. 10 to 12, the BS (or gNB) may configure related RRC parameters for the UE. The RRC parameters may include configurations (e.g., a PDCCH monitoring adaptation operation to be performed, a default SS set, and/or *monitoringTimer*) related to PDCCH monitoring adaptation described in the present disclosure.

Some of proposed methods may be selectively applied to the embodiments proposed in the present disclosure. Each method may be performed independently without being separately combined with other methods, or one or more methods may be combined and performed in an associated form. Some terms, symbols, orders, etc. used to describe the present disclosure may be replaced with other terms, symbols, orders, etc. as long as a corresponding principle is maintained.

Hereinafter, while the present disclosure will exemplarily describe an arbitrary structure for PDCCH monitoring adaptation and transmission and reception of DCI format x_1 and/or DCI format x_2 in order to explain a corresponding principle, the proposed methods are not limited to specific DRX or a specific type of DCI transmission or reception unless stated otherwise. Therefore, it is obvious that the embodiments proposed in the present disclosure may be applied to a PDCCH monitoring adaptation operation according to DCI transmission and reception, even if there is no separate explanation, as long as the corresponding principle is not violated.

In the case of a DRX operation of the UE of Rel-15 and Rel-16 standards, when DCI is detected within a DRX active time, a DRX timer (e.g., an inactivity timer) is reset. Therethrough, a new timer is started in addition to an onDuration timer, which is a start timer for the DRX active time, and an effect of extending the DRX active time as a whole may occur.

There may be various types of DCI indicating PDCCH monitoring adaptation proposed in the present disclosure. For example, the DCI may be divided into scheduling DCI and non-scheduling DCI. The scheduling DCI may schedule a PDSCH and simultaneously indicate PDCCH monitoring adaptation. On the other hand, the non-scheduling DCI may only indicate PDCCH monitoring adaptation without scheduling the PDSCH alone. Alternatively, the non-scheduling DCI may indicate both other instructions for purposes other than PDCCH scheduling and PDCCH monitoring adaptation. In this case, the present disclosure basically assumes that, when the non-scheduling DCI is detected within a DRX active time and there is no separate indication or configuration, the new DRX timer is not reset.

### 1. Embodiment #1: SS Set Group Switching

SS set group switching has newly been defined in the Rel-16 standard and indicates whether to monitor a PDCCH by dividing SS sets into groups. This SS set group switching may also be utilized as an operation for PDCCH monitoring adaptation within a DRX active time and may be introduced through modification or supplement for power saving after Rel-17.

The SS set group switching operation defined in Rel-16 means switching between two SS set groups, SS set group #0 and SS set group #1. In the existing operation, there may be SS sets that are not included in any SS set group among SS set group #0 and SS set group #1. Regardless of whether the UE is indicated to monitor one SS set group among SS set group #0 and SS set group #1, the UE may always monitor SS sets that are not included in any SS set group.

In an embodiment of the present disclosure, the number of SS set groups exceeding two may be defined and there may be SS sets that are not included in any SS set group. The SS sets that are not included in any SS set group may be defined as a default SS set group. For this purpose, parameters related to SS set group switching may be preconfigured for a connected-mode UE through RRC. For example, the parameters related to SS set group switching may include the number of SS set groups, a timer for a fallback operation, and a delay until SS set group switching is applied (e.g., application delay).

### (1) Embodiment #1-1: SS Set Group configuration

According to standard document TS 38.213, an SS set group for SS set group switching in Rel-16 is given as in [Table 6] below.

**[Table 6]**

| |
|---|
| A UE can be provided a group index for a respective Type3-PDCCH CSS set or USS set by *searchSpaceGroupIdList* for PDCCH monitoring on a serving cell. If the UE is not provided *searchSpaceGroupIdList* for a search space set, the following |
| procedures are not applicable for PDCCH monitoring according to the search space set. |

In other words, only a Type3 CSS and USS may be included in the SS set group. According to standard document TS 38.213, the type of each SS set is defined as in [Table 7].

**[Table 7]**

| A set of PDCCH candidates for a UE to monitor is defined in terms of PDCCH search space sets. A search space set can be a CSS set or a USS set. A UE monitors PDCCH candidates in one or more of the following search spaces sets |
|---|
| - a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG |
| - a Type0A-PDCCH CSS set configured by *searchSpaceOtherSystemInformation* in *PDCCH-ConfigCommon* for a DCI format with CRC scrambled by a SI-RNTI on the primary cell of the MCG |
| - a Typel-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell |
| - a Type2-PDCCH CSS set configured by *pagingSearchSpace* in *PDCCH-ConfigCommon* for a DCI format with CRC scrambled by a P-RNTI on the primary cell of the MCG |
| - a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, CI-RNTI, or PS-RNTI and, only for the primary cell, C-RNTI, MCS-C-RNTI, or CS-RNTI(s), and |
| - a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL-L-CS-RNTI. |

In [Table 7], the usage of each CSS may be classified as follows. - Type0-PDCCH CSS set: Initial access
- Type0A-PDCCH CSS set: Reception of additional system information (ondemand system information (OSI)) at the request of the UE
- Type1-PDCCH CSS set: Reception of a response of a network at the request of the UE in a random access procedure
- Type2-PDCCH CSS set: Change of system information and indication (or paging) of a public warning system (PWS)
- Type3-PDCCH CSS set: Other CSSs

The connected-mode UE may perform monitoring of the Type0-PDCCH CSS set, Type0A-PDCCH CSS set, Type1-PDCCH CSS set, and/or Type2-PDCCH CSS set according to the above-described respective usages. For example, in the case of the Type1-PDCCH CSS set, if the UE is not performing the random access procedure, since there is no need to receive DCI that schedules Msg2, Msg4, or MsgB, the UE does not need to monitor the Type1-PDCCH CSS set.

In the proposal of the present disclosure, the SS set group may be configured as follows.
- Opt 1) Only a Type3-PDCCH CSS and USS may be included in the SS set group. The UE may always monitor SS sets that are not included in the SS set group.
- Opt 2) All types of SS sets need to be included in one or more SS set groups.

Assuming that the UE monitors only one SS set group at a time through the SS set group switching operation of the UE, Opt 2 may require an operation of switching to an SS set group in which a CSS set of a corresponding type is included whenever the Type0-PDCCH CSS set, the Type0A-PDCCH CSS set, the Type1-PDCCH CSS set, and/or the Type2-PDCCH CSS set needs to be monitored. However, this operation may not be good in terms of power saving of the UE or scheduling of the BS. When the Type0-PDCCH CSS set, the Type0A-PDCCH CSS set, the Type1-PDCCH CSS set, and/or the Type2-PDCCH CSS set is configured to be included in one SS set group and when the UE is configured to always monitor a corresponding SS set group regardless of the SS set group switching operation of the UE, this may be substantially the same operation as Opt 1.

Therefore, the proposal of the present disclosure basically assumes, unless stated otherwise, Opt 1, or Opt 2 which is configured to include the Type0-PDCCH CSS set, the Type0A-PDCCH CSS set, the Type1-PDCCH CSS set, and/or the Type2-PDCCH CSS set in one SS set group and to always monitor the Type0-PDCCH CSS set, the Type0A-PDCCH CSS set, the Type1-PDCCH CSS set, and/or the Type2-PDCCH CSS set regardless of the SS set group switching operation of the UE. For example, there is no SS set group including the Type0-PDCCH CSS set, the Type0A-PDCCH CSS set, the Type1-PDCCH CSS set, and/or the Type2-PDCCH CSS set and the UE may perform monitoring always or as needed regardless of the number of an SS set group indicated to the UE.

### (2) Embodiment #1-2: Default SS Set Group

In the embodiment of the present disclosure, the default SS set group is defined. Depending on the proposed operation of the UE and intended usage, the default SS set group may be defined as follows.
1) An SS set group for at least one SS set not included in a specific SS set group (e.g., SS set group #0 or SS set group #1);
2) An SS set group for at least one SS set that the UE monitors always or as needed; and/or
3) An SS set group for at least one SS set to which the UE falls back to monitor a PDCCH again.

Usage examples of each of the definitions of the default SS set group described above are as follows.

The default SS set group defined as in 1) may have the same form as in Opt 1 in Embodiment #1-1 described above.

In the case of 2), the default SS set may be an SS set group that is basically monitored (or capable of being monitored) regardless of SS set switching (or PDCCH monitoring skipping) indicated to the UE. Using the case of 2), the UE may cope with various error cases such as DCI misdetection of the UE. For example, when the UE misses DCI indicating SS set switching, the UE may monitor the default SS set group. In addition, even though the BS also indicates SS set switching, if the UE does not transmit HARQ-ACK for a predetermined period of time or more or it is determined that the UE does not perform an operation corresponding to a PDCCH transmitted by the BS, the BS may transmit the PDCCH through the default SS set group.

In the case of 3), if a timer (or a duration indicated to perform a corresponding operation) expires without any other indications after SS set group switching (or PDCCH monitoring skipping) is indicated to the UE, the default SS set group may mean an SS set group for which the UE may start monitoring from a corresponding timing. For example, when there is no transmission from the BS for a predetermined period of time and/or a certain number of times (e.g., when the UE fails to receive a DL scheduling signal and/or a data signal from the BS) after PDCCH monitoring adaptation, the UE may perform PDCCH monitoring for at least one SS set included in the SS set group according to the definition of 3).

Meanwhile, while the present embodiment describes examples according to the definitions of the default SS set group, each example may be alternately applied to the case of the default SS set group of another definition.

The default SS set group may be predefined as one of the types of default set groups defined as described above or may be configured for the UE through RRC by the BS. Meanwhile, the default SS set group may not be configured and, in this case, all SS sets may be included in one or more SS set groups.

In the present embodiment, since the definitions of the default SS set are not completely mutually exclusive, one or more methods may be used in combination. For example, the default SS set group may be a group of at least one SS set that is monitored always or as needed and monitoring needs to be performed when the UE fails to receive transmission from the BS for a predetermined period of time and/or a predetermined number of times so that the UE needs to monitor an SS set other than a currently monitored SS set. For example, the above-described example may correspond to a combination of 2) + 3).

As another example, the UE may monitor a group of at least one SS set that is not included in a specific SS set group always or as needed, and this may correspond to a combination of definitions 1) + 2).

Similar to 2), a group for at least one SS set that the UE always monitors may be referred to as an always-on SS set group. The always-on SS set group may be used to configure a set of SS sets that the UE should always monitor regardless of an SS set group indicated through SS set group switching. Alternatively, even in the case of skipping, which stops PDCCH monitoring, the always-on SS set group may be used to configure a set of SS sets that the UE should always monitor without stopping PDCCH monitoring.

Monitoring of the default SS set group may change according to an indication through DCI and/or a specific situation. For example, an indication of stopping PDCCH monitoring during a duration in which monitoring of the default SS set group is switched or extending a PDCCH monitoring periodicity and/or an SS set periodicity by N times may be included in a switching indication field of the DCI.

Alternatively, when the UE is indicated to monitor a specific SS set group, the UE may be configured to perform the corresponding operation. Alternatively, a window may be configured within a full duration in which the SS set group is switched and the UE may be indicated to monitor the default SS set group only during the window. For example, the window may be defined by a starting point within an SS set group switching duration and as a duration. For example, the window may be defined as a duration from the starting point of the SS set group switching duration to a predetermined timing. When the UE is indicated to monitor an SS set group with a long periodicity through the above-described operation, the UE may stop monitoring the default SS set group or increase the monitoring periodicity, thereby maximizing a power saving effect.

If the UE is indicated to change monitoring of the default SS set group or the UE misses DCI indicating an SS set group to be changed, since the UE monitors the default SS set group without change, this does not conflict with the purpose of the default SS set defined to prepare for error cases.

Meanwhile, detailed operations (e.g., stopping PDCCH monitoring or extending the PDCCH monitoring periodicity and/or the SS set periodicity) may be configured by the BS for the UE through RRC configuration.

### (3) Embodiment #1-3: 1-Bit Switching Signaling DCI

In DCI, a field or bit indicating the SS set group switching operation of the UE may be defined as 1 bit or 2 bits or more. Even in the embodiments of the present disclosure, the bit in the DCI for indicating SS set group switching may be implemented as 1 bit.

For the operation of indicating SS set group switching using 1 bit, two groups (e.g., SS set group #0 and SS set group #1) are configured for the UE by the BS through an RRC signal, and the UE may change an SS set group in which the UE has monitored a PDCCH through a 1-bit SS set group switching flag, like existing SS set group switching of Rel-16. In other words, since there are two SS set groups, SS set group #0 and SS set group #1, the SS set group may be changed through the 1-bit flag.

Meanwhile, a timer indicating the duration of the SS set group switching operation may be preconfigured. Additionally, the UE may start monitoring of a switched SS set after a predetermined time (e.g., application delay) from the time when the DCI indicating the SS set group switching operation is received. This may serve to ensure a processing time for the UE to decode the DCI. The application delay may be configured for the UE in consideration of the capabilities of the UE in an RRC configuration procedure. Alternatively, the application delay may be a predetermined value by a mandatory feature of the UE.

Meanwhile, a type of fallback timer may be configured for the SS set group switching operation of the UE. The UE may monitor a PDCCH by switching an SS set group and simultaneously start the fallback timer. If there is no additional indication after the fallback timer expires, whether the UE should fall back to monitor the SS set group before starting the SS set group switching operation or should monitor the default SS set group configured by the BS through RRC (e.g., in the case of 3) of Embodiment #1-2) may be preconfigured. The timer for PDCCH monitoring newly starts when the UE receives DCI and expires when the UE fails to receive the DCI during a duration of the timer.

Alternatively, an SS set group, which is a target of monitoring rather than switching of the SS set group, may be indicated through 1 bit included in the DCI. For example, in addition to SS set group #0 and SS set group #1 for general PDCCH monitoring configured for the UE, a special SS set group may be configured. The special SS set group may be a null group that does not contain any SS sets. Alternatively, the special SS set group may be an SS set group corresponding to 1) or 2) among the proposals of the default SS set group defined in Embodiment #1-2.

For example, if the null group is configured, the UE may be indicated to monitor SS set group #0 by default and be indicated through an SS set group switching bit of the DCI to monitor the null group and SS set group #1. In this case, when the null group (or SS set group #1) is indicated, the UE may monitor a corresponding SS set and simultaneously start a timer. When the timer expires, the UE may monitor SS set group #0 again.

The monitoring operation of the null group by the UE is the same as a PDCCH monitoring skipping operation. Depending on whether the default SS set group is configured (1) or 2) of Embodiment #1-2) and/or whether each of all SS sets is included in one or more SS set groups, the PDCCH monitoring skipping operation may be configured as an operation in which all PDCCHs (e.g., SS set) are not monitored or an operation in which minimum PDCCHs (e.g., SS set) are monitored.

For example, if the default SS set group is configured, the UE may be indicated to basically monitor the default SS set group and monitor at least one of SS set group #0 and SS set group #1 through the SS set group switching bit included in the DCI. In this case, the UE may start monitoring of SS set group #0 and/or SS set group #1 and simultaneously start the timer. If the timer expires, the UE may be configured to monitor the default SS set group. Additionally, if the UE is indicated again through the DCI to monitor a currently monitored SS set group, the UE may return to the default SS set group and monitor the default SS set even before the timer expires. This is because indication of the same SS set group as an SS set group that the UE is currently monitoring through the DCI for SS set group switching may mean that information of the BS about an SS set group to be monitored may be different. Alternatively, since SS set group switching is indicated using 1 bit, indication of the same SS set group as the currently monitored SS set group may implicitly indicate that the UE needs to monitor the default SS set group.

### (4) Embodiment #1-4: DCI Including SS Set Group Switching Field of 2 Bits or More

In the RRC configuration procedure, more than two SS set groups and indexes corresponding to respective SS set groups may be configured for the UE by the BS. Additionally, a bit length of a field within the DCI may be determined depending on the number of SS set groups that may be explicitly indicated through the DCI. For example, when the number of SS set groups is N_SS, the bit length of the field in the DCI indicating the SS set groups may be determined as ceil(log2(N_SS)).

A fallback timer and application delay for the DCI including a plurality of bits are configured in the same way as in 1-bit signaling and are configured to prepare for error cases, so the UE may perform the SS set group switching operation based on the DCI. Therefore, the basic operation of the UE is the same as in 1-bit signaling, and the only difference may be that the UE is notified of the number (e.g., index) of an SS set group that needs to be switched through the field in the DCI.

As another example, multiple pairs of {duration (A), SS set group ID (B)} may be configured for the UE through RRC. The bit length of the field within the DCI may be determined depending on the number of pairs configured. "A" is an SS set group switching duration and may indicate the number of slots, number of symbols, or ms during which the UE will continue the switching operation. Therefore, when the UE receives the DCI and confirms that the corresponding field indicates {A, B}, the UE may monitor SS set group #B during A slots, A symbols, or A ms after a preset application delay. In addition, the UE may start a timer with a length of the duration A while monitoring SS set group #B, newly start the timer each time the DCI is received, and monitor a preconfigured SS set group (e.g., default SS set group) when the timer expires.

In other words, the duration A serves as the fallback timer. Therefore, configuration of multiple durations through RRC may mean that the fallback timer is configured as multiple values rather than one fixed value. If the BS is capable of predicting data to be transmitted to the UE, an effect of reducing the latency of data transmission may be expected by differently configuring the durations depending on the data to be transmitted.

Meanwhile, among a plurality of states configured through RRC as described above, a state indicating that the UE should continue to monitor a currently monitored SS set group during a specific duration may be included. For example, an operation of (additionally) monitoring SS set group #B during a specific duration in addition to a duration configured as a pair of {A, B} in an existing state or extending a monitoring duration of a specific SS set group to a very long duration may be indicated. For example, a state that indicates continuous monitoring during a specific duration may be a state that indicates only the specific duration without indication of an SS set group. For example, the state may be a pair of {A, -} or a pair of {A, reserved}. When the corresponding state is indicated, the UE may additionally monitor, during the duration A, an SS set group monitored at a timing at which the UE receives the DCI indicating the state (or a timing after the application delay from the reception timing of the DCI).

In this case, the added duration A may start from the reception timing of the DCI (or a timing after the application delay from the reception timing of the DCI) and end after the duration A. Alternatively, the ending timing of a monitoring duration of a currently monitored SS set group may become the starting timing of the duration A, so that monitoring may end after the duration A from the ending timing of the monitoring duration of the SS set group. For example, while a pair of {A', B} is indicated to the UE so that the UE is monitoring SS set group #B, when a pair of {A", -} is indicated, the duration A" may start from an indicated timing (or a timing after an application delay from the indicated timing) or the duration A" may start at a timing at which the duration A' ends.

### (5) Embodiment #1-5: Behavior of UE based on Embodiment #1-1 to Embodiment #1-4

The fallback timer may serve to prevent error cases (e.g., misdetection of the UE) between the UE and the BS. For example, the UE may fail to receive corresponding DCI although the BS indicates, to the UE, SS set group switching to monitor a specific SS set group. In this case, an SS set that the UE is currently monitoring and an SS set associated with a control resource set (CORESET) in which the BS transmits the DCI may not match. Therefore, if a time during which the UE fails to receive the DCI continues for a predetermined duration or more (e.g., a time set by a timer), the UE may monitor a preconfigured SS set group (e.g., a default SS set group). In other words, if the UE fails to receive the DCI for a predetermined period of time, the UE may switch to the preconfigured SS set group (e.g., default SS set group).

The BS expects to receive HARQ-ACK from the UE. If HARQ-ACK is not received from the UE, the BS may determine that the UE monitors an SS set group different from an SS set group of an SS set through which the BS has transmitted a PDCCH and wait for a predetermined period of time (e.g., a duration of a specific timer) to expect that the UE will switch to the preconfigured SS set group (e.g., default SS set group).

Alternatively, when the BS fails to receive HARQ-ACK from the UE, the BS may indicate again SS set group switching through an SS set group that the UE is currently monitoring. Considering that the UE misses the DCI although the UE monitors an SS set group expected by the BS, the BS may retransmit the DCI to the UE if the BS fails to receive HARQ-ACK.

Alternatively, since the BS may not distinguish between simple DCI missing by the UE and an error case in which the UE monitors an incorrect SS set group, retransmission of the DCI through an SS set within an SS set group that the UE monitors after fallback of the UE by waiting for a time corresponding to the fallback timer may be advantageous in terms of time/frequency resources.

When the BS fails to receive HARQ-ACK and/or when the UE fails to detect the DCI, an operation to be performed by the BS and/or the UE may be selected from among the above-described operations by the BS or may be configured, in consideration of at least one of the fallback timer, a PDCCH transmission slot, or a PDSCH transmission slot.

Meanwhile, the SS set switching operation of the UE may be included in the DCI that schedules the PDSCH. In this case, the UE may switch to an SS set group indicated through the DCI as described above while receiving the PDSCH. Then, the UE may naturally expect that DCI related to retransmission will be monitored through an SS set within the switched SS set group.

Additionally, an SS set switching operation timing of the UE may be configured in conjunction with HARQ-ACK. When the SS set switching operation of the UE is included in the DCI that schedules the PDSCH, the UE does not apply SS set group switching after an application delay but may perform an indicated SS set group switching operation after all retransmission procedures are completed.

That is, the UE may perform the switching operation to the indicated SS set group after transmitting ACK for all CBGs of the PDSCH. If the CBGs are not configured, the UE may perform the same operation of switching to the indicated SS set group after performing ACK transmission for all TBs.

For example, when NACK for a specific HARQ process is reported to the BS, the UE may perform the SS set group switching operation after transmitting final ACK for a corresponding HARQ process (in units of CBGs or TBs). Alternatively, the UE may perform the SS set group switching operation after transmitting the final ACK for all HARQ processes.

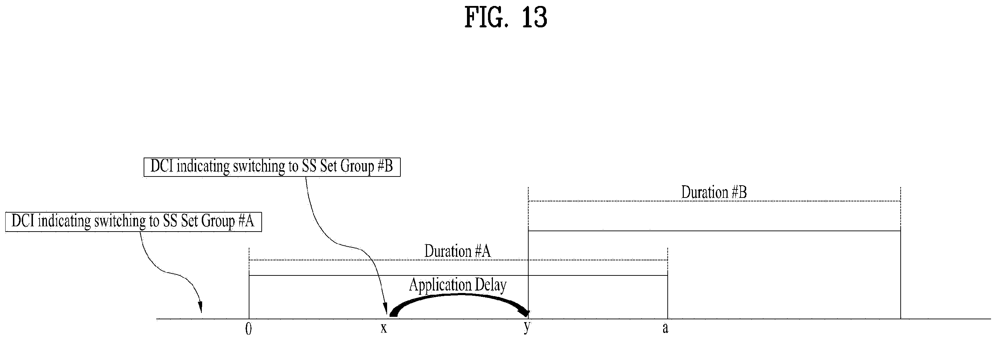

After a specific SS set group switching operation is indicated to the UE, another SS set group switching operation may be indicated within a duration for monitoring a corresponding SS set group before the duration expires. For example, referring to FIG. 13, when the UE monitors SS set group #A based on DCI indicating SS set group switching to SS set group #A, the UE may receive DCI indicating SS set group switching to SS set group #B within monitoring duration #A of SS set group #A (e.g., a duration of an SS set group switching timer). In this case, as illustrated in FIG. 13, it is assumed that SS set group switching to SS set group #A is 0, a monitoring ending timing of SS set group #A of the UE in case of not receiving the DCI is a, a reception timing of the DCI indicating SS set group switching to SS set group #B is x, and a timing after an application delay from x is y. In this case, a PDCCH monitoring operation after the UE receives the DCI indicating switching to SS set group #B may be summarized as the following three cases. In FIG. 13, duration #A may mean a duration in which the UE monitors SS set group #A if the DCI indicating switching to SS set group #B is not received.
1) The UE performs monitoring of SS set group #A only up to the timing y and then monitors SS set group #B during duration #B corresponding to SS set group #B. For example, duration #B may start from the timing y.
2) The UE performs monitoring of SS set group #A up to the timing a and performs monitoring of SS set group #B during duration #B from the timing y. For example, duration #B is a timing for monitoring SS set group #B from the timing y. Therefore, the UE may perform monitoring of at least one SS set included in the union of SS set group #A and SS set group #B from the timing y to the timing a. After the timing a, the UE may monitor only SS set group #B until duration #B is completed.
3) The UE monitors only SS set group #A until the timing y. After the timing y, the UE performs monitoring of at least one SS set included in the union of SS set group #A and SS set group #B during an indicated duration or a duration of a timer. For example, the UE may monitor SS set group #A up to the timing y and monitor both SS set group #A and SS set group #B from the timing y until duration #B is completed.

In other words, the PDCCH monitoring method of the UE may differ according to a method of performing a current monitoring operation and a newly indicated monitoring operation based on the timing y after the application delay from the timing x at which the UE receives the DCI during the SS set group switching operation.

For example, the operation of 1) corresponds to the case in which, when the UE is indicated to monitor a new SS set group (e.g., SS set group #B), the UE ignores an original duration (e.g., duration #A) for a monitoring operation of a current SS set group (e.g., a monitoring operation of SS set group #A) and monitors the current SS set group (e.g., SS set group #A) only up to a monitoring starting timing (e.g., y) of a new SS set group. That is, the UE may immediately stop monitoring the current SS set group (e.g., SS set group #A) while starting monitoring of the new SS set group (e.g., SS set group #B).

The operation of 2) corresponds to the case in which, when the UE is indicated to monitor the new SS set group (e.g., SS set group #B), the UE continues to monitor the current SS set group (e.g., SS set group #A) during a scheduled duration (e.g., duration #A) and also monitors the new SS set group (e.g., SS set group #B) based on an indication through the DCI. Therefore, the UE may simultaneously monitor the two SS set groups by overlapping from the monitoring starting timing (e.g., y) of the new SS set group (e.g., SS set group #B) to a timing (e.g., a) at which monitoring of a previous SS set group (e.g., SS set group #A) will be scheduled to end. The UE may monitor at least one SS set included in the union of the two SS set groups during the overlapping duration (e.g., from y to a).

In other words, monitoring of the current SS set group (e.g., SS set group #A) continues only in the originally scheduled duration (e.g., duration #A) except for a duration (e.g., duration #B) of a timer that is reset due to reception of new DCI. Therethrough, the operation of the UE by previous DCI (e.g., DCI that indicates switching to SS set group #A) is not ignored by the new DCI (e.g., DCI that indicates switching to SS set group #B) and may be continuously performed.

The operation of 3) corresponds to the case in which, when the UE is indicated to perform switching to monitor the new SS set group (e.g., SS set group #B), the UE performs the monitoring operation of the current SS set group (e.g., SS set group #A) even up to a duration of a timer (e.g., duration #B) that is reset due to reception of the new DCI (e.g., DCI indicating switching to SS set group #B). Accordingly, the UE may monitor the two SS set groups (e.g., SS set group #A and SS set group #B) until an ending timing of the reset timer duration (e.g., duration #B). This may mean that the BS adds monitoring of the new SS set group (e.g., SS set group #B) to the current SS set group (e.g., SS set group #A) for the UE.

Meanwhile, the operations of the UE described in Embodiment #1 may be fixedly configured or may be configured as a plurality of operations by the BS in an RRC procedure. The BS may select the operation method of the UE during RRC configuration or indicate the operation method of the UE through the DCI.

### 2. Embodiment #2: PDCCH Monitoring Skipping

PDCCH monitoring skipping may mean that the UE stops part or all of PDCCH monitoring for a predetermined duration or until the end of a corresponding DRX cycle. For example, the UE reduces power consumption by entering micro-sleep for a predetermined duration or until the end of the DRX cycle.

A time (e.g., a micro-sleep time) at which the UE stops monitoring a PDCCH may be configured through RRC configuration. In consideration of the DRX cycle of the UE, a plurality of PDCCH monitoring stopping times (e.g., candidates of micro-sleep times that may be indicated by DCI) may be configured. In addition, one of the PDCCH monitoring stopping times may be indicated through the received DCI.

However, even if there is information that the BS desires to transmit, the UE is incapable of receiving the information while the UE is in a sleep mode. Therefore, the concept of a default SS set group may be used so that the BS configures a sleep time in consideration of this situation, or the UE monitors a minimum SS set even while sleeping. In other words, the default SS set group may be configured so that the UE monitors the minimum SS set even while sleeping. Meanwhile, for PDCCH monitoring skipping, the application delay, which is a time required from a timing at which the UE receives DCI indicating PDCCH monitoring skipping until the UE actually performs an operation, may be configured as in SS set group switching.

### (1) Embodiment #2-1: Behavior of UE

The BS may configure, for the UE, durations in which multiple PDCCH monitoring operations are to be skipped through RRC configuration. The BS may transmit DCI indicating one of the durations to the UE. The duration may be expressed in units of slots, symbols, or ms. A bit length of a field indicating PDCCH monitoring skipping within the DCI may be determined according to the number of durations. For example, when the number of PDCCH monitoring skipping durations that the BS may indicate through the DCI is N_skip, the bit length of a PDCCH monitoring skipping field in the DCI may be determined as ceil(log2(N_skip)).

The durations may include skipping PDCCH monitoring until the next DRX cycle. For example, the durations may include an operation of skipping PDCCH monitoring until the current DRX cycle ends. Therefore, one of the PDCCH monitoring skipping durations may be indicated to the UE through the DCI, and the UE may skip monitoring of a PDCCH within the corresponding PDCCH monitoring skipping duration after the application delay from a DCI reception timing. In this case, the UE may skip PDCCH monitoring based on one of two methods below.
1) The UE may stop monitoring all PDCCHs and perform a micro-sleep operation.
2) The UE may continue to monitor minimum SS sets (e.g., a default SS set group) and stop monitoring the remaining PDCCHs.

Method 1) is advantageous in terms of power consumption because the UE may enter micro-sleep according to an indicated PDCCH monitoring skipping operation. However, the UE may not respond to sudden traffic from the BS. Therefore, problems may occur in terms of latency because the BS should wait for the UE to stop the PDCCH monitoring skipping operation in order to suddenly transmit traffic.

In contrast, in method 2), since the UE continues to monitor preset minimum SS sets (e.g., default SS set group), the UE may respond to sudden traffic although the UE is incapable of entering a sleep mode. The concept of the default SS set group described in Embodiment #1 may be used to set the minimum SS sets. For example, a default SS set group that includes SS sets having a cycle shorter than a minimum value of PDCCH monitoring skipping durations that may be indicated to the UE may be configured. Thereafter, upon receiving the DCI through monitoring of the default SS set group, the UE may completely stop PDCCH monitoring skipping or receive a scheduled PDSCH while performing the indicated PDCCH monitoring skipping operation.

Meanwhile, the change of monitoring of the default SS set group, which is the operation described in SS set group switching of Embodiment #1, may be applied even when PDCCH monitoring skipping is indicated. For example, while the PDCCH monitoring skipping operation is indicated, stopping monitoring of the default SS set group during the entire PDCCH monitoring skipping duration or during a predetermined window or a change in a monitoring periodicity of the default SS set group may be indicated or preconfigured.

Alternatively, the PDCCH monitoring skipping operation of the UE may be included and indicated in DCI that schedules a PDSCH. In this case, the UE needs to continue to receive DCI related to HARQ processing while receiving the PDSCH. Therefore, a starting timing of the PDCCH monitoring skipping operation of the UE may be defined as follows, and the operation of the UE may vary depending on each starting timing.
A) A timing after an application delay after receiving DCI indicating PDCCH monitoring skipping
B) A timing at which HARQ processing is completed
C) A timing at which the UE completes transmission of all or part of HARQ-ACK

In the case of A), since the UE performs the PDCCH monitoring skipping operation immediately after the application delay, the UE needs to continue to monitor minimum SS sets (e.g., default SS set group) for HARQ processing and may operate using the method of 2) of Embodiment #2- 1 described above.

In the case of B), since an indication of PDCCH monitoring skipping by the BS may assume that there will be no transmission traffic after the UE receives DCI indicating PDCCH monitoring skipping, the UE may perform an operation based on one of the methods 1) and 2) of Embodiment #2-1 described above after completing all retransmission procedures.

As previously described in relation to the SS set group switching operation, the UE may perform the PDCCH monitoring skipping operation upon transmitting final ACK for all HARQ processes (in units of CBGs or TBs).

The case of C) may be a timing when it is determined that the UE does not need any more PDSCH scheduling. While a timing of transmitting HARQ-ACK for all CBGs or TBs is similar to the case of B), a timing when transmission of HARQ-ACK for partial CBGs or TB is completed may be configured in conjunction with the default SS set group. For example, a reference timing at which it is determined that a retransmission procedure may be completed only with SS sets included in the default SS set group may be configured with respect to CBGs or TBs that the UE has not yet received. The UE may perform the operation of 1) of Embodiment #2-1 at a timing when the retransmission procedure is completed. The BS may expect that the UE will perform the operation described above.

The operations of the UE and the starting timings of PDCCH monitoring skipping may be included in RRC configuration so that the BS may select the same. For example, the BS may configure a plurality of operations of the UE and a plurality of starting timings of PDCCH monitoring skipping for the UE through RRC.

When the basic operations of the UE and the starting timings of PDCCH monitoring skipping are configured, the BS may select one of the operations of the UE and/or the starting timings of PDCCH monitoring skipping and indicate the selected operation and/or starting timing to the UE. Alternatively, the operations of the UE and the starting timings of PDCCH monitoring skipping that are capable of being supported by the BS may be fixedly configured. One or more application delays may be configured in consideration of DCI processing of the UE, and the BS may indicate the application delays or configure the application delays through RRC.

### (2) Embodiment #2-2: Multiple Pairs for PDCCH Monitoring Slots and PDCCH Monitoring Skipping Slots

Only a PDCCH monitoring skipping duration is configured, and a PDCCH monitoring skipping operation may be indicated through a method other than a method of indicating whether PDCCH monitoring skipping is performed. For example, a plurality of pairs of { number of monitoring slots (X), number of skipping slots (Y)} may be configured through RRC. Additionally, a bit length of a field within DCI may be determined according to the number of configured pairs. X means the number of slots to continue to perform PDCCH monitoring, and Y means the number of slots to skip PDCCH monitoring after PDCCH monitoring for X slots is performed. A starting time of PDCCH monitoring for X slots may be determined from a DCI reception timing or may be after an application delay from the DCI reception timing.

The UE may operate using one of two methods by interpreting received DCI. As an example, the UE may perform PDCCH monitoring for X slots, skip PDCCH monitoring for Y slots, and then perform PDCCH monitoring corresponding to an operation before DCI reception. As another example, the UE may repeat, until an additional indication is given, an operation of performing PDCCH monitoring for X slots and then skipping PDCCH monitoring for Y slots.

Meanwhile, a special case may be included in configurable pairs. For example, since X=0 means that the number of slots for PDCCH monitoring is 0, the UE may perform a normal PDCCH monitoring skipping operation after DCI reception (or after an application delay from DCI reception). That is, when X=0, the UE may perform the PDCCH monitoring skipping operation without performing PDCCH monitoring after DCI reception or after the application delay from the DCI reception timing.

In addition, since Y=0 means that the number of slots for PDCCH monitoring skipping is 0, the UE continues to perform PDCCH monitoring. Therefore, in this case, the UE may stop the operation of performing PDCCH monitoring skipping for Y slots after performing PDCCH monitoring for X slots and continue to monitor a PDCCH. That is, when Y=0, the UE may continuously monitor the PDCCH without performing PDCCH monitoring skipping.

As described above, various operations of the UE, including the PDCCH monitoring skipping operation described above based on pairs configured through RRC, may be configured/indicated. Additionally, when X is not 0, X may serve to provide a previous preparation time for performing the PDCCH monitoring skipping operation in addition to the application delay. Through various X values, the BS may provide a time for a retransmission procedure (e.g., HARQ processing) before performing the PDCCH monitoring skipping operation in consideration of the size of a TB to be transmitted to the UE.

### 3. Embodiment #3: PDCCH Monitoring Skipping and/or SS Set Group Switching by One DCI

SS set group switching and PDCCH monitoring skipping may be configured independently to indicate one of SS set group switching and PDCCH monitoring skipping, and both SS set group switching and PDCCH monitoring skipping may be configured to simultaneously indicate SS set group switching and PDCCH monitoring skipping for one UE. If the UE is capable of performing all operations based on SS set group switching and PDCCH monitoring skipping, the BS may indicate one of SS set group switching and PDCCH monitoring skipping or indicate both SS set group switching and PDCCH monitoring skipping, in consideration of a traffic situation or scheduling.

For example, each of SS set group switching and PDCCH monitoring skipping may be configured independently, and the BS may configure, in DCI, a 1-bit flag for distinguishing between SS set group switching and PDCCH monitoring skipping. For example, when the 1-bit flag is 1, this may mean that the DCI indicates a PDCCH monitoring skipping duration in units of slots, symbols, or ms. When the 1-bit flag is 0, this may mean that the DCI indicates an index of an SS set group to be switched among three or more SS set groups. Alternatively, when the 1-bit flag is 0, this may mean that the DCI indicates switching between two SS set groups. In other words, which operation of Embodiment #1 or Embodiment #2 is to be performed may be indicated through the 1-bit flag. The meaning that the 1-bit flag indicates may vary depending on a configuration method by the BS in an RRC configuration procedure, and the BS may selectively indicate the meaning of the 1-bit flag.

Further, the BS may configure and indicate at least some of details for each embodiment. For example, after multiple pairs are configured through RRC, when the 1-bit flag received through the DCI is 1, a corresponding pair may be interpreted as {X, Y}, and when the 1-bit flag is 0, the pair may be interpreted as {A, B}.

Here, {X, Y} relates to PDCCH monitoring skipping, where X may be the number of slots during which PDCCH monitoring is performed, and Y may be the number of slots during which PDCCH monitoring is skipped. In addition, {A, B} relates to SS set group switching, where A may be the number of slots during which a PDCCH is monitored according to SS set group switching, and B may be an index of an SS set group monitored during A slots. Alternatively, both A and B may be indexes of SS set groups, indicating that SS set group #B is to be monitored during predetermined slots after SS set group #A is monitored during predetermined slots.

As another example, a plurality of pairs of {number of monitoring slots (X), number of skipping slots (Y), and SS set group ID (B)} may be configured in an RRC configuration procedure. When one of the above pairs is indicated to the UE through the DCI, the UE may monitor SS set group #B during X slots and perform a PDCCH monitoring skipping operation during Y slots. That is, the BS may indicate that the UE should skip PDCCH monitoring after the SS set group switching operation. Alternatively, {X2, Y2} may be configured through RRC in combination with the 1-bit flag and may be interpreted as {X, Y} during PDCCH monitoring skipping and as { A, B} during SS set group switching, according to the 1-bit flag.

Through Embodiment #3, since SS set switching and PDCCH monitoring skipping operations may be indicated in combination through one DCI indication, DCI signaling overhead may be reduced. The UE descrambles DCI scrambled with the same RNTI using the same method and only needs to differently interpret the DCI according to the 1-bit flag. Therefore, decoding complexity may be reduced.

### 4. Embodiment #4: SS Set Switching/PDCCH Monitoring Skipping Pattern

The operations of PDCCH monitoring skipping and SS set group switching may be configured as patterns. The BS may configure a plurality of SS set groups and methods of performing the PDCCH monitoring skipping operation of the UE for the UE. For example, the BS may configure a plurality of patterns combining SS set group switching and PDCCH monitoring skipping through RRC. For example, a pattern such as {SS set group #0/SS set group # 0/PDCCH monitoring skipping/SS set group #1} may be configured as one of the patterns. Durations for respective operations within the pattern may be the same or different. For example, each operation within the pattern may be configured by the BS for the UE through RRC and/or DCI. A starting point at which the UE performs an indicated pattern may be after a preset application delay from a time at which the pattern is indicated. An operation based on the indicated pattern may be stopped after being performed once or may be performed repeatedly. In addition, whether the operation according to the indicated pattern is performed only once or repeatedly may be fixed through preconfiguration or configured through RRC so that the BS may selectively indicate whether the operation according to the indicated pattern is performed only once or repeatedly.

A DRX active time of the UE may increase for various reasons, thereby causing misalignment between the indicated pattern and a DRX cycle. Therefore, the UE gives priority to the DRX cycle unless specially indicated otherwise. In other words, according to the indicated pattern, even if there is an SS set to be monitored, the UE may enter a sleep mode when the DRX active time ends.

For example, when the DRX active time ends, the UE may terminate the operation of the indicated pattern and expect a new indication in the next DRX cycle. Meanwhile, a monitoring operation within a corresponding DRX cycle may be previously indicated through DCI received at the start of the DRX active time or DCI (e.g., DCI format 2_6) that may be received outside the active time, so that non-scheduling DCI indicating only PDCCH monitoring adaptation of the UE may not be transmitted within the DRX active time. If PDCCH monitoring adaptation within the DRX active time is previously indicated to the UE, an effect of previously indicating a PDCCH monitoring method to be performed just before the end of the DRX cycle may be obtained. Therethrough, a latency problem of waiting until the next DRX cycle due to failure to receive the DCI during a PDCCH monitoring skipping operation although traffic suddenly occurs from the BS may be prevented.

Meanwhile, a full duration of the indicated pattern may be configured based on one of the following three cases.
1) An onDuration timer
2) A remaining time of a DRX active timer
3) A fixed value

Depending on each case, a duration in which a detailed operation within the pattern is performed and the operation of the UE may be different.

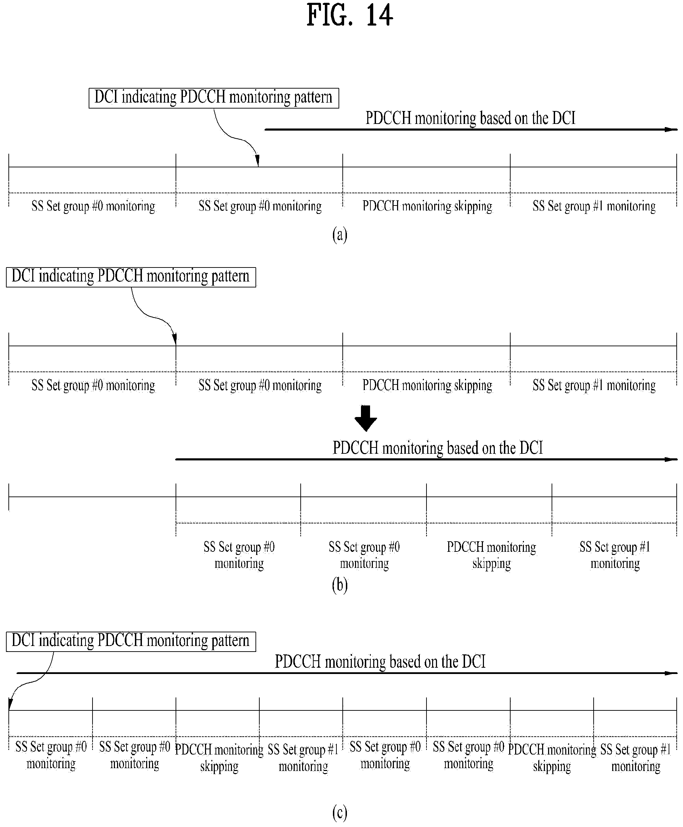

Referring to FIG. 14, FIG. 14(a) illustrates the case of 1). In the case of 1), the full duration of the first indicated pattern is configured based on the DRX onDuration timer. In this case, durations of detailed operations are configured as the ratio of each detailed operation to the entire DRX onDuration timer. The UE determines the detailed operations within the entire pattern based on a DCI reception timing. For example, when the DRX onDuration timer is 100 ms and DCI is received after 40 ms, the UE may perform the detailed operations of the pattern for 60 ms, which is 60% of the DRX onDuration timer among the full pattern duration in which the detailed operations within the pattern are to be performed. In other words, the detailed operations of the pattern configured during 40 ms, which is prior to the DCI reception timing, are omitted, and the detailed operations of the pattern configured during a duration of 60 ms from 40 ms to 100 ms may be performed.

FIG. 14(b) illustrates the case of 2). In the case of 2), detailed operations are configured as a ratio corresponding to each detailed operation by calculating the remaining DRX active time of the full duration of the pattern as 100%. Therefore, the UE may sequentially perform detailed operations starting from the first detailed operation within the pattern from the DCI reception timing. For example, when the DRX onDuration timer is 100 ms and the DCI reception timing is 40 ms, detailed operation durations are divided from 40 ms to 100 ms based on respective detailed operation ratios, and each detailed operation may be performed in a corresponding duration.

FIG. 14(c) illustrates the case of 3). In the case of 3), the full duration of the pattern may be fixed and set to a constant value. In addition, the fixed constant value may be configured by the BS in consideration of the DRX timer of the UE. In the case of 3), the full duration of the pattern and the DRX active time may be misaligned. Therefore, the UE may repeatedly perform the entire operation of the pattern within the DRX active time. For example, when the DRX onDuration timer is 100 ms, the DCI reception timing is 40 ms, and a duration in which each detailed operation is performed is 10 ms, the detailed operations of the pattern may be performed from 40 ms to 80 ms. Thereafter, a PDCCH monitoring operation according to the pattern may be stopped starting from 80 ms, or the PDCCH monitoring operation according to the pattern may be repeated again starting from 80 ms.

The DRX active time may increase for reasons such as DCI detection in the DRX operation of the UE. In this case, the operation of the UE to which a pattern for a PDCCH monitoring adaptation operation is indicated may be configured as follows. The operations below define methods in which the UE performs the operations of a pattern when the DRX active time is extended by receiving scheduling DCI indicating the pattern.
A) A current detailed operation is performed up to a timing of [remaining timer duration after extension = duration within a pattern in which the detailed operation is not performed]
B) The current detailed operation is performed according to an extended timer (e.g., until an inactivity timer expires)
C) A pattern operation is fixedly performed regardless of the extended timer

In the case of A), the UE may perform an operation that the UE is currently performing (e.g., monitoring of a specific SS set group) longer than an originally set duration. For example, if the inactivity timer starts while the UE monitors SS set group #0, the UE continues to monitor SS set group #0. If the inactivity timer has not started, even when it is time to monitor SS set group #1, the UE continues to monitor SS set group #0 if the inactivity timer is running. Thereafter, the UE may monitor SS set group #1, which is the next operation in a pattern, at a timing at which the remaining time of the DRX active time matches the remaining duration of an indicated pattern. This operation has an effect of matching the remaining duration in the pattern with a subsequent DRX active time of the UE.

In the case of B), the UE may perform an operation that the UE is currently performing (e.g., monitoring of a specific SS set group) according to an extended timer (e.g., until the inactivity timer expires) when there is no additional indication. For example, if the inactivity timer has started while the UE monitors SS set group #0, the UE may monitor SS set group #0 until the timer expires. In this case, if the timer is extended again due to detection of another DCI etc., the UE discards a previous operation and follows a new DCI indication. If the UE terminates the DRX active time according to the inactivity timer or a retransmission timer, an effect of synchronously terminating one detailed operation is obtained although the UE does not perform detailed operations after monitoring of SS set group #0 within a pattern.

In the case of C), a detailed operation within a pattern is always performed at a corresponding timing regardless of the extended timer. For example, even if the inactivity timer starts while the UE monitors SS set group #0, the UE monitors SS set group #1, regardless of whether the inactivity timer is counted, at a timing when the UE should monitor SS set group #1 in the case in which the inactivity timer has not started. However, even in this case, when the DRX active time ends, the UE may stop monitoring and enter a sleep mode.

Meanwhile, the BS may configure a combination of the full duration of an indicated pattern and a detailed operation associated with DRX or indicate configurations.

According to Embodiment #4, a plurality of PDCCH monitoring adaptation operations may be configured for the UE through one DCI indication, thereby reducing signaling overhead. In addition, since multiple PDCCH monitoring adaptation operations that should be performed over a considerable period of time may be indicated through one DCI indication, the UE may be prevented from entering a sleep mode and causing problems in configuring a subsequent PDCCH monitoring adaptation operation.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

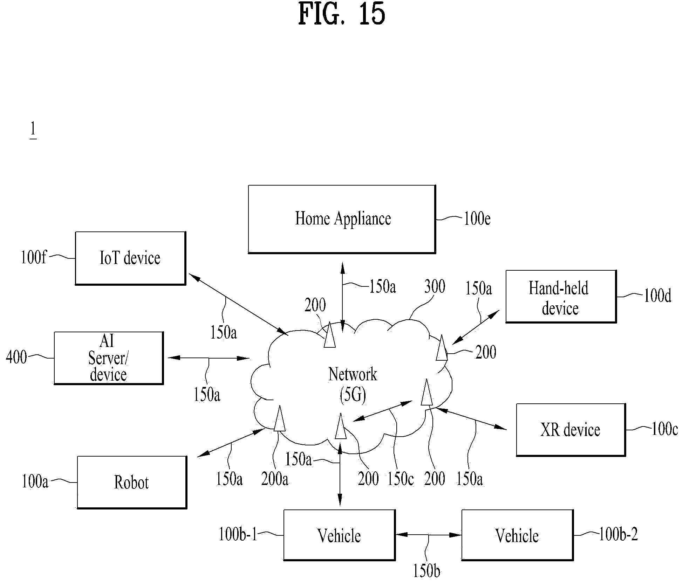

FIG. 15 illustrates a communication system 1 applied to the present disclosure.

Referring to FIG. 15, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

FIG. 16 illustrates wireless devices applicable to the present disclosure.

Referring to FIG. 16, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor(s) 102 of the first wireless device 100 and stored in the memory(s) 104 of the first wireless device 100, according to an embodiment of the present disclosure will now be described.

Although the following operations will be described based on a control operation of the processor(s) 102 in terms of the processor(s) 102, software code for performing such an operation may be stored in the memory 104. For example, in the present disclosure, the at least one memory(s) 104 may store instructions or programs as a computer-readable storage medium. The instructions or the programs may cause, when executed, at least one processor operably connected to the at least one memory to perform operations according to embodiments or implementations of the present disclosure, related to the following operations.

For example, the processor(s) 102 may control the transceiver(s) 106 to receive an RRC signal including information related to PDCCH monitoring adaptation. For example, the information included in the RRC signal may be based on at least one of [Embodiment #1] to [Embodiment #4] described above.

The processor(s) 102 may control the transceiver(s) 106 to receive DCI that indicates PDCCH monitoring adaptation. For example, the DCI may indicate an operation related to PDCCH monitoring adaptation based on at least one of [Embodiment #1] to [Embodiment #4] described above.

The processor(s) 102 may monitor a PDCCH based on indicated PDCCH monitoring adaptation and control the transceiver(s) 106 to receive a PDCCH. For example, the processor(s) 102 may monitor the PDCCH and control the transceiver(s) 106 to receive the PDCCH, based on at least one of [Embodiment #1] to [Embodiment #4] described above.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor 202 of the second wireless device 200 and stored in the memory 204 of the second wireless device 200, according to an embodiment of the present disclosure will now be described.

Although the following operations will be described based on a control operation of the processor 202 in terms of the processor 202, software code for performing such an operation may be stored in the memory 204. For example, in the present disclosure, the at least one memory 204 may store instructions or programs as a computer-readable storage medium. The instructions or the programs may cause, when executed, at least one processor operably connected to the at least one memory to perform operations according to embodiments or implementations of the present disclosure, related to the following operations.

For example, the processor(s) 202 may control the transceiver(s) 206 to transmit an RRC signal including information related to PDCCH monitoring adaptation. For example, the information included in the RRC signal may be based on at least one of [Embodiment #1] to [Embodiment #4] described above.

The processor(s) 202 may control the transceiver(s) 206 to transmit DCI that indicates PDCCH monitoring adaptation. For example, the DCI may indicate an operation related to PDCCH monitoring adaptation based on at least one of [Embodiment #1] to [Embodiment #4] described above.

The processor(s) 202 may control the transceiver(s) 206 to transmit a PDCCH based on indicated PDCCH monitoring adaptation. For example, the processor(s) 202 may control the transceiver(s) 206 to transmit the PDCCH based on at least one of [Embodiment #1] to [Embodiment #4] described above.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

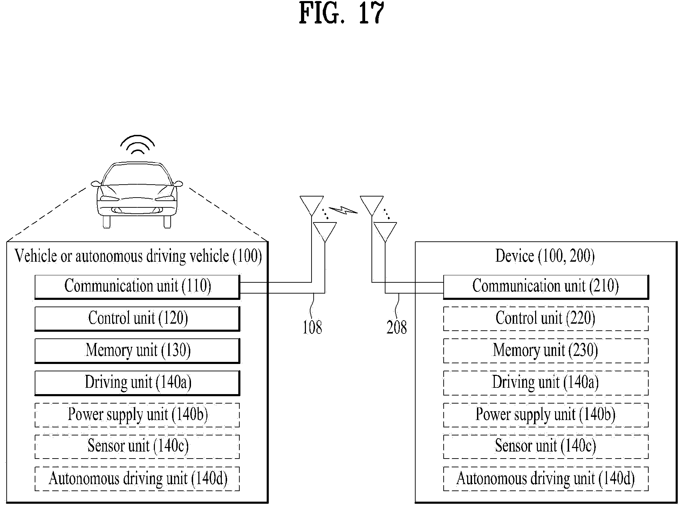

FIG. 17 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 17 a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

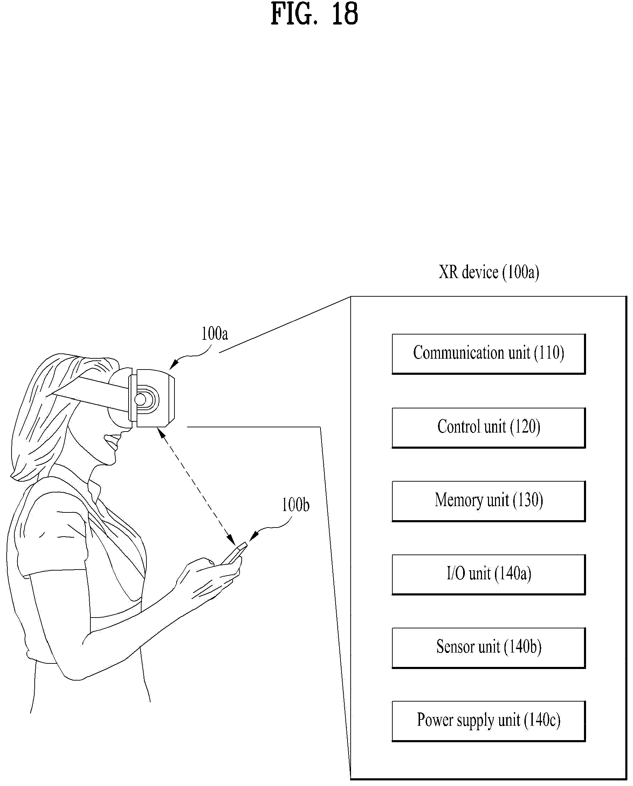

FIG. 18 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 18, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

### Industrial Applicability

While the above-described method of transmitting and receiving a signal in an unlicensed band and an apparatus therefor have been described based on an example applied to a 5G NR system, the method and apparatus are applicable to various wireless communication systems in addition to the 5G NR system.

## Claims

1. A method by a user equipment, UE, the method comprising:
receiving, via radio resource control, RRC, signaling, a plurality of parameter sets for physical downlink control channel, PDCCH, monitoring adaptation, wherein each of the parameter sets includes a number of slots for monitoring, a number of slots for skipping, and an index of a search space set group;
receiving downlink control information, DCI, including a field indicating a parameter set among the plurality of parameter sets; and
monitoring a PDCCH based on the parameter set indicated by the field, wherein, based on that each of the number of slots for monitoring, the number of slots for skipping, and the index included in the parameter set is X, Y, and Z, the search space set group with the index of Z is monitored during X slots and the monitoring is skipped for Y slots, wherein X, Y, and Z are non-negative integer.

2. The method of claim 1, wherein the field is a 1-bit flag.

3. The method of claim 1, wherein operation of the PDCCH monitoring adaptation is initiated after a specific time from a timing at which the DCI is received.

4. A user equipment, UE (100a-100f), comprising:
at least one transceiver;
at least one processor; and
at least one memory operably connected to the at least one processor and configured to store instructions causing, when executed, the at least one processor to perform operations,
wherein the operations comprise:
receiving (S1001), via radio resource control, RRC, signaling, a plurality of parameter sets for physical downlink control channel, PDCCH, monitoring adaptation, wherein each of the parameter sets includes a number of slots for monitoring, a number of slots for skipping, and an index of a search space set group through the at least one transceiver;
receiving (S1003) downlink control information, DCI, including a field indicating a parameter set among the plurality of parameter sets through the at least one transceiver; and
monitoring (S1005) a PDCCH based on the parameter set indicated by the field,
wherein, based on that each of the number of slots for monitoring, the number of slots for skipping, and the index included in the parameter set is X, Y, and Z, the search space set group with the index of Z is monitored during X slots and the monitoring is skipped for Y slots, wherein X, Y, and Z are non-negative integer.

5. The UE of claim 4, further configured to perform any one of the methods of claims 2 and 3.

6. A method by a base station, BS, the method comprising:
transmitting, via radio resource control, RRC, signaling, a plurality of parameter sets for physical downlink control channel, PDCCH, monitoring adaptation, wherein each of the parameter sets includes a number of slots for monitoring, a number of slots for skipping, and an index of a search space set group;
transmitting downlink control information, DCI, including a field indicating a parameter set among the plurality of parameter sets; and
transmitting a PDCCH based on the parameter set indicated by the field,
wherein, based on that each of the number of slots for monitoring, the number of slots for skipping, and the index included in the parameter set is X, Y, and Z, the search space set group with the index of Z is monitored during X slots and the monitoring is skipped for Y slots, wherein X, Y, and Z are non-negative integer.

7. A base station, BS (200), comprising:
at least one transceiver;
at least one processor; and
at least one memory operably connected to the at least one processor and configured to store instructions causing, when executed, the at least one processor to perform operations,
wherein the operations comprise:
transmitting (S1101), via radio resource control, RRC, signaling, a plurality of parameter sets for physical downlink control channel, PDCCH, monitoring adaptation, wherein each of the parameter sets includes a number of slots for monitoring, a number of slots for skipping, and an index of a search space set group through the at least one transceiver;
transmitting (S1103) downlink control information, DCI, including a field indicating a parameter set among the plurality of parameter sets through the at least one transceiver; and
transmitting (S1105) a PDCCH based on the parameter set indicated by the field through the at least one transceiver,
wherein, based on that each of the number of slots for monitoring, the number of slots for skipping, and the index of the search space set group included in the parameter set is X, Y, and Z, the search space set group with the index of Z is monitored during X slots and the monitoring is skipped for Y slots, wherein X, Y, and Z are non-negative integer.

## Patentansprüche

1. Verfahren durch ein Benutzergerät (UE), wobei das Verfahren umfasst:
Empfangen, über Funkressourcensteuerungs-, RRC-, Signalisierung, einer Mehrzahl von Parametersätzen für eine Überwachungsanpassung eines physikalischen Downlink-Steuerkanals, PDCCH, wobei jeder der Parametersätze eine Anzahl von Slots zum Überwachen, eine Anzahl von Slots zum Überspringen und einen Index einer Suchraumsatzgruppe umfasst;
Empfangen von Downlink-Steuerinformationen, DCI, die ein Feld enthalten, das einen Parametersatz aus der Mehrzahl von Parametersätzen angibt; und
Überwachen eines PDCCH auf der Grundlage des durch das Feld angegebenen Parametersatzes,
wobei auf der Grundlage, dass die Anzahl der Slots zum Überwachen, die Anzahl der Slots zum Überspringen und der Index, die in dem Parametersatz enthalten sind, X, Y und Z sind, die Suchraumsatzgruppe mit dem Index Z während X Slots überwacht wird und das Überwachen für Y Slots übersprungen wird, wobei X, Y und Z nicht-negative ganze Zahlen sind.

2. Verfahren nach Anspruch 1, wobei das Feld ein 1-Bit-Flag ist.

3. Verfahren nach Anspruch 1, wobei ein Betrieb der PDCCH-Überwachungsanpassung nach einer bestimmten Zeit ab einem Zeitpunkt, zu dem die DCI empfangen werden, initiiert wird.

4. Benutzergerät, UE (100a-100f), umfassend:
mindestens einen Transceiver;
mindestens einen Prozessor; und
mindestens einen Speicher, der funktionsfähig mit dem mindestens einen Prozessor verbunden und so konfiguriert ist, dass er Befehle speichert, die bei ihrer Ausführung den mindestens einen Prozessor dazu veranlassen, Operationen auszuführen,
wobei die Operationen Folgendes umfassen:
Empfangen (S1001), über Funkressourcensteuerungs-, RRC-, Signalisierung, einer Mehrzahl von Parametersätzen für eine Überwachungsanpassung eines physikalischen Downlink-Steuerkanals, PDCCH, wobei jeder der Parametersätze eine Anzahl von Slots zum Überwachen, eine Anzahl von Slots zum Überspringen und einen Index einer Suchraumsatzgruppe umfasst, durch den mindestens einen Transceiver;
Empfangen (S1003) von Downlink-Steuerinformationen, DCI, die ein Feld enthalten, das einen Parametersatz aus der Mehrzahl von Parametersätzen angibt, durch den mindestens einen Transceiver; und
Überwachen (S1005) eines PDCCH auf der Grundlage des durch das Feld angegebenen Parametersatzes,
wobei auf der Grundlage, dass die Anzahl der Slots zum Überwachen, die Anzahl der Slots zum Überspringen und der Index, die in dem Parametersatz enthalten sind, X, Y und Z sind, die Suchraumsatzgruppe mit dem Index Z während X Slots überwacht wird und das Überwachen für Y Slots übersprungen wird, wobei X, Y und Z nicht-negative ganze Zahlen sind.

5. UE nach Anspruch 4, das ferner so konfiguriert ist, dass es eines der Verfahren nach den Ansprüchen 2 und 3 ausführt.

6. Verfahren durch eine Basisstation, BS, wobei das Verfahren umfasst:
Übertragen, über Funkressourcensteuerungs-, RRC-, Signalisierung, einer Mehrzahl von Parametersätzen für eine Überwachungsanpassung eines physikalischen Downlink-Steuerkanals, PDCCH, wobei jeder der Parametersätze eine Anzahl von Slots zum Überwachen, eine Anzahl von Slots zum Überspringen und einen Index einer Suchraumsatzgruppe umfasst;
Übertragen von Downlink-Steuerinformationen, DCI, die ein Feld enthalten, das einen Parametersatz aus der Mehrzahl von Parametersätzen angibt; und
Übertragen eines PDCCH auf der Grundlage des durch das Feld angegebenen Parametersatzes,
wobei auf der Grundlage, dass die Anzahl der Slots zum Überwachen, die Anzahl der Slots zum Überspringen und der Index, die in dem Parametersatz enthalten sind, X, Y und Z sind, die Suchraumsatzgruppe mit dem Index Z während X Slots überwacht wird und das Überwachen für Y Slots übersprungen wird, wobei X, Y und Z nicht-negative ganze Zahlen sind.

7. Basisstation, BS (200), umfassend:
mindestens einen Transceiver;
mindestens einen Prozessor; und
mindestens einen Speicher, der funktionsfähig mit dem mindestens einen Prozessor verbunden und so konfiguriert ist, dass er Befehle speichert, die bei ihrer Ausführung den mindestens einen Prozessor dazu veranlassen, Operationen auszuführen,
wobei die Operationen Folgendes umfassen:
Übertragen (S1101), über Funkressourcensteuerungs-, RRC-, Signalisierung, einer Mehrzahl von Parametersätzen für eine Überwachungsanpassung eines physikalischen Downlink-Steuerkanals, PDCCH, wobei jeder der Parametersätze eine Anzahl von Slots zum Überwachen, eine Anzahl von Slots zum Überspringen und einen Index einer Suchraumsatzgruppe umfasst, durch den mindestens einen Transceiver;
Übertragen (S1103) von Downlink-Steuerinformationen, DCI, die ein Feld enthalten, das einen Parametersatz aus der Mehrzahl von Parametersätzen angibt, durch den mindestens einen Transceiver; und
Übertragen (S1105) eines PDCCH auf der Grundlage des durch das Feld angegebenen Parametersatzes durch den mindestens einen Transceiver,
wobei auf der Grundlage, dass die Anzahl der Slots zum Überwachen, die Anzahl der Slots zum Überspringen und der Index der Suchraumsatzgruppe, die in dem Parametersatz enthalten sind, X, Y und Z sind, die Suchraumsatzgruppe mit dem Index Z während X Slots überwacht wird und das Überwachen für Y Slots übersprungen wird, wobei X, Y und Z nicht-negative ganze Zahlen sind.

## Revendications

1. Procédé exécuté par un équipement utilisateur, UE, le procédé comprenant:
la réception, via la signalisation de gestion des ressources radio, RRC, d'une pluralité d'ensembles de paramètres pour l'adaptation de la surveillance du canal physique de commande de liaison descendante, PDCCH, chacun des ensembles de paramètres comprenant un certain nombre de créneaux pour la surveillance, un certain nombre de créneaux à ignorer et un indice d'un groupe d'ensembles d'espaces de recherche;
la réception d'informations de commande de liaison descendante, DCI, comprenant un champ indiquant un ensemble de paramètres parmi la pluralité des ensemble de paramètres; et
la surveillance d'un PDCCH sur la base de l'ensemble de paramètres indiqué par le champ,
dans lequel, étant donné que le nombre de créneaux pour la surveillance, du nombre de créneaux à ignorer et de l'indice inclus dans l'ensemble de paramètres est X, Y et Z, l'ensemble d'espaces de recherche avec l'indice de Z est surveillé pendant X créneaux et la surveillance est ignorée pendant Y créneaux , X, Y et Z étant des entiers non négatifs.

2. Procédé selon la revendication 1, dans lequel le champ est une indication à 1 bit.

3. Procédé selon la revendication 1, dans lequel l'adaptation de surveillance de PDCCH est lancée après un délai spécifique à partir du moment où les DCI sont reçues.

4. Équipement utilisateur, UE (100a - 100f), comprenant:
au moins un émetteur récepteur; et
au moins un processeur; et
au moins une mémoire connectée fonctionnellement à l'au moins un processeur et configurée pour stocker des instructions qui, lorsqu'elles sont exécutées, amènent l'au moins un processeur à effectuer les opérations,
les opérations comprenant:
la réception (S1001), via la signalisation de gestion des ressources radio, RRC, d'une pluralité d'ensembles de paramètres pour l'adaptation de la surveillance du canal physique de commande de liaison descendante, PDCCH, chacun des ensembles de paramètres comprenant un certain nombre de créneaux pour la surveillance, un certain nombre de créneaux à ignorer et un indice d'un groupe d'ensembles d'espaces de recherche par l'au moins un émetteur récepteur;
la réception (S1003) d'informations de commande de liaison descendante, DCI, comprenant un champ indiquant un ensemble de paramètres parmi la pluralité des ensemble de paramètres par l'au moins un émetteur récepteur;
la surveillance (S1005) d'un PDCCH sur la base de l'ensemble de paramètres indiqué par le champ,
dans lequel, étant donné que le nombre de créneaux pour la surveillance, du nombre de créneaux à ignorer et de l'indice inclus dans l'ensemble de paramètres est X, Y et Z, l'ensemble d'espaces de recherche avec l'indice de Z est surveillé pendant X créneaux et la surveillance est ignorée pendant Y créneaux , X, Y et Z étant des entiers non négatifs.

5. UE selon la revendication 4, configuré en outre pour exécuter l'un parmi les procédés des revendications 2 et 3.

6. Procédé exécuté par une station de base, BS, le procédé comprenant:
la transmission, via la signalisation de gestion des ressources radio, RRC, d'une pluralité d'ensembles de paramètres pour l'adaptation de la surveillance du canal physique de commande de liaison descendante, PDCCH, chacun des ensembles de paramètres comprenant un certain nombre de créneaux pour la surveillance, un certain nombre de créneaux à ignorer et un indice d'un groupe d'ensembles d'espaces de recherche;
la transmission d'informations de commande de liaison descendante, DCI, comprenant un champ indiquant un ensemble de paramètres parmi la pluralité des ensemble de paramètres; et
la transmission d'un PDCCH sur la base de l'ensemble de paramètres indiqué par le champ,
dans lequel, étant donné que le nombre de créneaux pour la surveillance, du nombre de créneaux à ignorer et de l'indice inclus dans l'ensemble de paramètres est X, Y et Z, l'ensemble d'espaces de recherche avec l'indice de Z est surveillé pendant X créneaux et la surveillance est ignorée pendant Y créneaux , X, Y et Z étant des entiers non négatifs.

7. Station de base, BS (200), comprenant:
au moins un émetteur récepteur; et
au moins un processeur; et
au moins une mémoire connectée fonctionnellement à l'au moins un processeur et configurée pour stocker des instructions qui, lorsqu'elles sont exécutées, amènent l'au moins un processeur à effectuer les opérations,
les opérations comprenant:
la transmission (S1101), via la signalisation de gestion des ressources radio, RRC, d'une pluralité d'ensembles de paramètres pour l'adaptation de la surveillance du canal physique de commande de liaison descendante, PDCCH, chacun des ensembles de paramètres comprenant un certain nombre de créneaux pour la surveillance, un certain nombre de créneaux à ignorer et un indice d'un groupe d'ensembles d'espaces de recherche par l'au moins un émetteur récepteur;
la transmission (S1103) d'informations de commande de liaison descendante, DCI, comprenant un champ indiquant un ensemble de paramètres parmi la pluralité des ensemble de paramètres par l'au moins un émetteur récepteur;
la transmission (S1105) d'un PDCCH sur la base de l'ensemble de paramètres indiqué par le champ par l'au moins un émetteur récepteur,
dans lequel, étant donné que le nombre de créneaux pour la surveillance, du nombre de créneaux à ignorer et de l'indice inclus dans l'ensemble de paramètres est X, Y et Z, l'ensemble d'espaces de recherche avec l'indice de Z est surveillé pendant X créneaux et la surveillance est ignorée pendant Y créneaux , dans lequel X, Y et Z sont des entiers non négatifs.
